# EUROPEAN PATENT APPLICATION

(11) **EP 2 133 942 A1**
(43) Date of publication of application: **16.12.2009**
(21) Application number: 08720272.7
(22) Date of filing: 27.02.2008
(51) Int. Cl.: H01M 2/26, H01M 10/04, H01M 10/36, H01G 9/016, H01M 10/28

(54) **SECONDARY BATTERY AND METHOD FOR MANUFACTURING SECONDARY BATTERY**

(30) Priority: 15.03.2007 JP 2007066163
(71) Applicant: Panasonic Corporation, Kadoma-shi Osaka 571-8501 (JP)
(72) Inventor: KOZUKI Kiyomi c/o Panasonic Corporation IPROC, Osaka-shi Osaka 540-6207 (JP); KANZAKI Jyunji c/o Panasonic Corporation IPROC, Osaka-shi Osaka 540-6207 (JP); HIRAKAWA Yasushi c/o Panasonic Corporation IPROC, Osaka-shi Osaka 540-6207 (JP)
(74) Representative: Grünecker, Kinkeldey, Stockmair & Schwanhäusser Anwaltssozietät
(86) International application number: PCT/JP2008/000358
(87) International publication number: WO 2008/111284

(57) **Abstract**

In a secondary battery, a current collector plate (10) and an electrode group (4) are joined together with a joint portion (19) interposed therebetween. The current collector plate (10) includes a covered portion (13) and a housing (14). The covered portion (13) includes a melting portion (11) and a guide portion (12). The melting portion (11) is located closer to the outside of the electrode group (4) than the tip surface S of the exposed end when the exposed end is housed in the housing (14). The guide portion (12) is located closer to the center of the electrode group (4) than the tip surface S. In the joint portion (19), a plurality of exposed end portions (1a), (1a), ... are located close to each other, and are joined to the current collector plate (10).

## Description

### TECHNICAL FIELD

The present invention relates to secondary batteries and methods for fabricating secondary batteries, and particularly relates to a tabless secondary battery and a method for fabricating such a secondary battery.

### BACKGROUND ART

Secondary batteries that have been employed as drive power supplies in recent years are one of important key devices, and development thereof had progressed. Among these batteries, nickel-metal hydride storage batteries and lithium ion secondary batteries have been widely used as household appliances, including cellular phones, and as drive power supplies for electric vehicles and electric tools because of their light weight, small size, and high energy density. In particular, lithium ion secondary batteries have received attention as drive power supplies in recent years, and thus have been actively developed for large capacity and high power.

Secondary batteries for use as drive power supplies require large output current. In view of this, secondary batteries having devised structures, particularly a devised current collecting structure (where a current collector plate is joined to an electrode group) have been proposed.

For example, a tabless current collecting structure in which one transverse end of each of a positive electrode plate and a negative electrode plate is joined to a current collector plate, exhibits a low electric resistance during current collection. Thus, the tabless current collecting structure is suitable for discharging large current. However, for tabless current collection, it is necessary to ensure that one transverse end of each of the positive and negative electrode plates is joined to the current collector plate.

FIG. 20(a) is a cross-sectional view showing a current collector plate 210 described in Patent Document 1. FIG. 20(b) is a cross-sectional view showing a state in which transverse ends of positive electrode plates (or negative electrode plates) 211 are joined to the current collector plate 210.

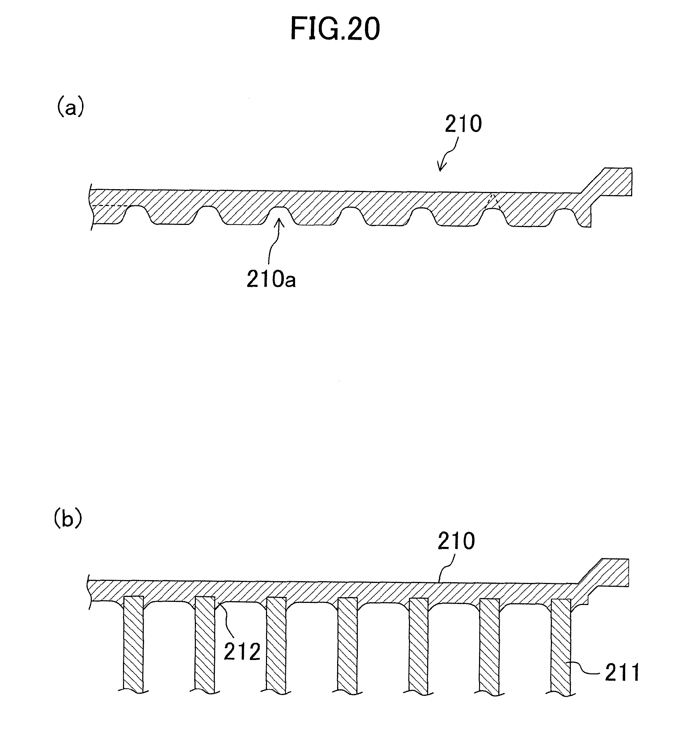

As shown in FIG. 20(a), grooves 210a, 210a, ... are formed in the surface of the current collector plate 210. The transverse ends of the positive electrode plates (or the negative electrode plates) 211 are respectively inserted in the grooves 210a, and then the edges of the grooves 210a are melted, thereby joining the transverse ends of the positive electrode plates (or the negative electrode plates) 211 to the current collector plate 210 as shown in FIG. 20(b).

In joint portions 212 of the current collecting structure formed in the manner described above, the transverse ends of the positive electrode plates (or the negative electrode plates) 211 are joined to the current collector plate 210, while being buried in a metal constituting the current collector plate 210. This ensures that the transverse ends of the positive electrode plates (or the negative electrode plates) 211 are joined to the current collector plate 210.

However, in the foregoing method, the grooves 210a, 210a, ... need to be formed in the current collector plate 210 at locations corresponding to the positive electrode plates (or the negative electrode plates) 211 in the electrode group. In addition, a position adjustment technique is necessary for inserting the transverse ends of the positive electrode plates (or the negative electrode plates) 211 into the grooves 210a, 210a,.... As a result, fabrication of a secondary battery becomes complicated, thus increasing the fabrication cost of the secondary battery.

Patent Document 2 describes a method that easily enables a transverse end of a positive electrode plate (or a negative electrode plate) to be joined to a current collector plate without a position adjustment technique as described above.

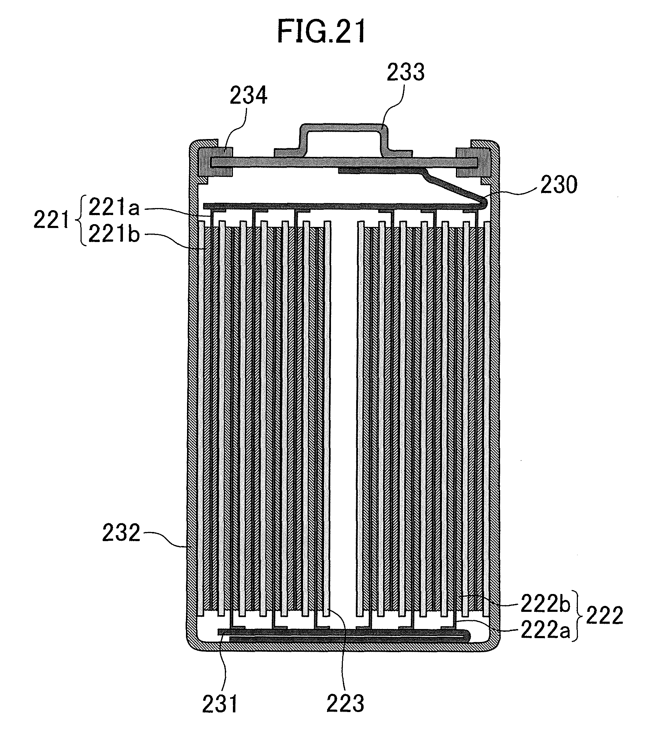

FIG. 21 is a cross-sectional view showing a secondary battery described in Patent Document 2. The secondary battery described in Patent Document 2 includes a battery case 232 sealed with a sealing plate 233 with a gasket 234 interposed therebetween. In this battery case 232, a positive electrode plate 221 and a negative electrode plate 222 are wound, while being longitudinally displaced from each other, with a separator 223 interposed therebetween. An end (i.e., an exposed end) 221a of the positive electrode plate 221 projecting from the separator 223 is joined to a current collector plate 230, whereas an end (i.e., an exposed end) 222a of the negative electrode plate 222 is joined to a current collector plate 231. Specifically, the end 221a of the positive electrode plate 221 is pressed against the current collector plate 230 along the axis (i.e., the vertical direction in FIG. 21) of a mandrel, thereby forming a flat portion in the end 221a. This flat portion is joined to the current collector plate 230. In the same manner, the end 222a of the negative electrode plate 222 is pressed against the current collector plate 231 along the axis of the mandrel, thereby forming a flat portion in the end 222a. This flat portion is joined to the current collector plate 231.

In such a current collecting structure, the end 221 a of the positive electrode plate 221 and the end 222a of the negative electrode plate 222 are easily joined to the current collector plates 230 and 231, respectively, without position adjustments of the ends 221a and 222a of the positive and negative electrode plates 221 and 222 to the current collector plates 230 and 231.

However, the foregoing method has a problem in increasing the capacity of, and reducing the size of, a secondary battery as follows. Specifically, when the thickness of foil constituting a current collector constituting the positive electrode plate 221 or the negative electrode plate 222 becomes thinner, the mechanical strength of the current collector decreases. Accordingly, even when the end 221a of the positive electrode plate 221 and the end 222a of the negative electrode plate 222 are pressed, it is difficult to uniformly bend these ends 221 a and 222a to form flat portions in the ends 221 a and 222a. In particular, since current collectors constituting the positive electrode plate 221 and the negative electrode plate 222 in a lithium ion secondary battery are made of aluminum or copper, it is extremely difficult to form flat portions by pressing when a thickness of the current collectors is about 20 µm or less. In addition, deformation of the end 221a of the positive electrode plate 221 and the end 222a of the negative electrode plate 222 during pressing causes a problem in which a mixture material is peeled off from mixture-material coated portions 221b and 222b of the positive and negative electrode plates 221 and 222 or is broken.

Patent Documents 3 and 4 describe techniques for enabling a transverse end of a positive electrode plate or a negative electrode plate to be joined to a current collector plate even when a current collector constituting the positive electrode plate or the negative electrode plate is made of thin foil.

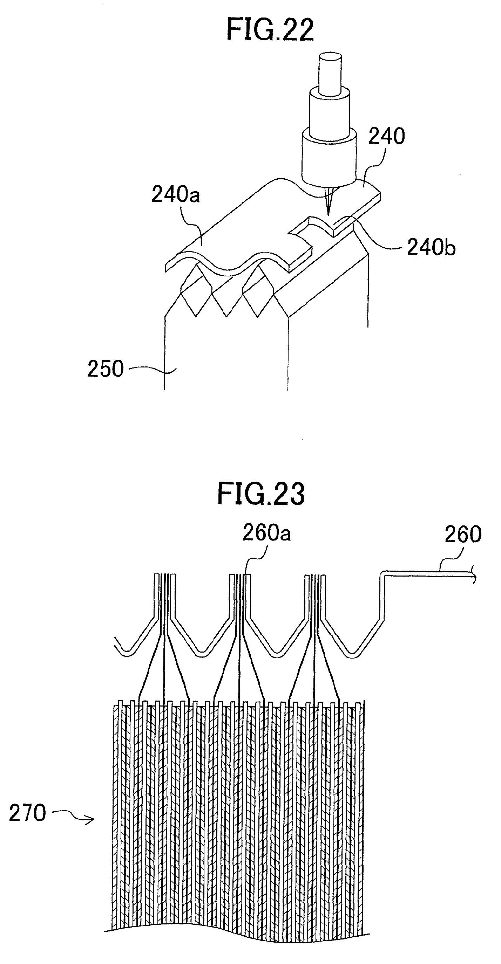

FIG. 22 is a perspective view showing a process in fabrication of a current collecting structure described in Patent Document 3. As shown in FIG. 22, a current collector plate 240 has a wave shape 240a and a groove 240b penetrating the current collector plate 240 in its thickness direction. Transverse end portions of a positive electrode plate (or a negative electrode plate) 250 are caused to converge into the wave shape 240a, and the edge of the groove 240b is melted, thereby joining the transverse end portions of the positive electrode plate (or the negative electrode plate) 250 to the current collector plate 240.

In the method described in Patent Document 3, only convergence of the transverse end portions of the positive electrode plate (or the negative electrode plate) 250 into the wave shape 240a of the current collector plate 240 enables the positive electrode plate (or the negative electrode plate) 250 to be joined to the current collector plate 240 with a melting member obtained by melting the current collector plate 240. Accordingly, in this current collecting structure, even when the current collector constituting the positive electrode plate (or the negative electrode plate) 250 becomes thinner to have its mechanical strength reduced, the transverse end portions of the positive electrode plate (or the negative electrode plate) 250 can be joined to the current collector plate 240 without application of a load on the current collector.

FIG. 23 is a cross-sectional view showing a current collecting structure described in Patent Document 4. As shown in FIG. 23, slits 260a, 260a, ... are formed in a current collector plate 260. Transverse end portions of a positive electrode plate (or a negative electrode plate) 270 are inserted in the slits 260a, thereby joining the positive electrode plate (or the negative electrode plate) 270 to the slits 260a. In this current collecting structure, even when a current collector constituting the positive electrode plate (or the negative electrode plate) 270 becomes thinner to have its mechanical strength reduced, the transverse end portions of the positive electrode plate (or the negative electrode plate) 270 can be joined to the current collector plate 260 without application of a load to the current collector.
Patent Document 1: Japanese Laid-Open Patent Publication No. 2006-172780
Patent Document 2: Japanese Laid-Open Patent Publication No. 2000-294222
Patent Document 3: Japanese Laid-Open Patent Publication No. 2003-36834
Patent Document 4: Japanese Laid-Open Patent Publication No. 10-261441

### DISCLOSURE OF INVENTION

### Problems that the Invention is to Solve

In the methods described in Patent Documents 3 and 4, even when the current collector constituting the positive electrode plate or the negative electrode plate becomes thinner, transverse end portions of the positive electrode plate or the negative electrode plate can be joined to the current collector plate. Thus, larger capacity and smaller size can be achieved for a secondary battery. However, the following problems arise in application of these methods.

In the method described in Patent Document 3, the edges of the grooves 240b are heated by, for example, arc welding, laser welding, and electron-beam welding. However, when scattering of light from an arc source or diffuse reflection of energy lines occur on the surface of the current collector plate 240 during melting of the grooves 240b, the scattered light or diffuse reflected energy light penetrates the current collector plate 240, resulting in formation of opening in the current collector plate 240 and damage on an electrode group located under the current collector plate 240.

Although the scattering or diffuse reflection on the surface of the current collector plate 240 is prevented by controlling the intensity of energy on the current collector plate 240, such energy control is not easy. For this reason, manufacture of secondary batteries with the method of Patent Document 3 would cause performance degradation of the secondary batteries and a decrease in the manufacturing yield of the secondary batteries.

Likewise, in the method of Patent Document 4, scattering or diffuse reflection occurring on the surface of the current collector plate 260 in melting the slits 260a causes scattered light or diffuse reflected energy to penetrate the current collector plate 260, resulting in formation of an opening in the current collector plate 260 and damage on the electrode group under the current collector plate 260. In addition, it is difficult to control the intensity of energy to be applied on the slits 260a so as to prevent scattering or diffuse reflection on the surface of the current collector plate 260. Accordingly, manufacturing secondary batteries with the method of Patent Document 4 also suffers from performance degradation of secondary batteries and a decrease in the manufacturing yield of secondary batteries.

It is therefore an object of the present invention to provide a secondary battery which ensures a joint between a positive electrode plate (or a negative electrode plate) and a current collector plate and which is suitable for discharging large current.

### Means of Solving the Problems

A method for fabricating a secondary battery according to the present invention includes the steps of: (a) preparing an electrode group; (b) preparing a current collector plate; (c) housing an exposed end of the electrode group in a housing of the current collector plate; and (d) joining the current collector plate and the electrode group together. In the electrode group prepared at step (a), the positive electrode plate, the negative electrode plate, and the porous insulating layer are arranged such that an exposed end at one transverse end of at least one of the positive and negative electrode plates projects from the porous insulating layer.

The current collector plate prepared at step (b) includes at least one housing for housing the exposed end, and includes a covered portion serving as a side wall of the housing. The housing has an opening. The covered portion includes: a melting portion located closer to an outside of the electrode group than a tip surface of the exposed end when the exposed end is housed in the housing; and at least one guide portion connected to the melting portion and located closer to a center of the electrode group than the tip surface of the exposed end when the exposed end is housed in the housing.

In step (c), the electrode group and the current collector plate are disposed such that the housing is located closer to the tip surface of the exposed end than the covered portion.

In step (d), the melting portion is melted, thereby welding the current collector plate and the electrode group together.

In this method, in step (d), a transverse end of the electrode plate is joined to the current collector plate. Thus, a secondary battery fabricated according to the above method can reduce its resistance during current collection.

In the method, in step (c), the exposed end is housed in the housing under the weight of the current collector plate. Accordingly, unlike a method of joining an exposed end and a current collector plate by inserting the exposed end in, for example, a through hole formed in the current collector plate, it is possible to prevent formation of a hole in the current collector plate during joining, thereby preventing damage on the electrode group (e.g., formation of a hole in the current collector or peeling of a mixture material from the surface of the current collector) during joining. Accordingly, secondary batteries can be manufactured with high yield. In addition, performance degradation of the manufactured secondary batteries can be suppressed.

Fabrication of a secondary battery with the method described above can prevent bending of the exposed end at step (c), as compared to a method of joining the exposed end and the current collector plate together by pressing the end surface of the electrode group against the current collector plate. Thus, this method ensures the joint of the exposed end to the current collector plate. In addition, since it is possible to prevent bending of the exposed end at step (c), distortion of the exposed end can be suppressed, resulting in preventing fractures of a mixture material and peeling of the mixture material from the surfaces of the current collector.

In a preferred embodiment to be described later, the current collector plate prepared at step (b) has at least one uneven portion which is projected and recessed in a width direction of the current collector plate, and the covered portion is the uneven portion.

In a preferred embodiment to be described later, the covered portion of the current collector plate prepared at step (b) includes a pair of the at least one guide portion, and the pair of the at least one guide portion is respectively connected to both ends of the melting portion in cross section perpendicular to a longitudinal direction of the exposed end to be housed in the housing at step (c), and in step (c), the pair of the at least one guide portion allows the exposed end to be housed in the housing, while sandwiching the exposed end in a direction substantially perpendicular to the longitudinal direction of the exposed end. Thus, it is possible to further ensure prevention of bending of the exposed edge at step (c).

In the method described above, in the current collector plate prepared at step (b), the housing has a recess, and a distance between the pair of the at least one guide portion deceases toward a bottom of the recess. This configuration allows the exposed end to be housed in the housing without bending of the exposed end.

In a preferred embodiment to be described later, in the current collector plate prepared at step (b), a central angle at a tip of the housing in a direction along a depth of the recess of the housing is an acute angle, and the current collector plate is made of Al.

In an alternative preferred embodiment to be described later, in the current collector plate prepared at step (b), a central angle at a tip of the housing in a direction along a depth of the recess of the housing is an obtuse angle, and the current collector plate is made of Cu.

In another preferred embodiment to be described later, in the current collector plate prepared at step (b), the covered portion has a V shape, a U shape, a rectangular shape, or a trapezoidal shape in cross section perpendicular to the longitudinal direction of the exposed end to be housed in the housing at step (c).

In still another preferred embodiment to be described later, a cylindrical electrode group in which the positive electrode plate, the negative electrode plate, and the porous insulating layer are wound is prepared in step (a), the current collector plate prepared at step (b) has a disk shape, in the current collector plate prepared at step (b), one of a pair of guide portions is located closer to the center of the current collector plate than the other guide portion, and the smaller one of the tilt angles of one of the guide portions is greater than the smaller one of the tilt angles of the other guide portion.

In a preferred embodiment to be described later, in the current collector plate prepared at step (b), the housing extends along at least a portion in a longitudinal direction of the exposed end to be housed in the housing at step (c).

In another preferred embodiment to be described later, in the current collector plate prepared at step (b), the housing is associated with a portion in a longitudinal direction of the exposed end to be housed in the housing at step (c), and multiple ones of the at least one housing are arranged side by side in a direction perpendicular to the longitudinal direction. In this case, the exposed end of the electrode group prepared at step (a) may include a plurality of exposed end portions, the method may further include the step of (e) bundling the exposed end portions, between step (b) and step (c), and in step (c), the exposed end portions bundled at step (e) may be inserted in the housing through the opening. In the current collector plate prepared at step (b), the melting portion may extend in parallel with the tip surface of the exposed end to be housed in the housing at step (c).

In a preferred embodiment to be described later, in the current collector plate prepared at step (b), either a cone or a pyramid is provided on a surface of the current collector plate facing the tip surface of the exposed end to be housed in the housing at step (c), and the cone or pyramid is the at least one guide portion.

In the method described above, in step (d), the electrode group and the current collector plate are preferably welded together with one of arc welding, laser welding, and electron-beam welding. In the current collector plate prepared at step (b), the housing is preferably formed by pressing.

A secondary battery according to the present invention includes an electrode group, a current collector plate, and a joint portion.

In the electrode group, a positive electrode plate, a negative electrode plate, and a porous insulating layer are arranged such that an exposed end at one transverse end of at least one of the positive and negative electrode plates projects from the porous insulating layer.

The current collector plate includes at least one housing for housing the exposed end, and includes a covered portion serving as a side wall of the housing. The housing has an opening for inserting the exposed end in the housing. The covered portion of the current collector plate includes: a melting portion located closer to an outside of the electrode group than a tip surface of the exposed end when the exposed end is housed in the housing; and a guide portion connected to the melting portion and located closer to a center of the electrode group than the tip surface of the exposed end when the exposed end is housed in the housing.

In the joint portion, the current collector plate and the electrode group are joined together by melting the melting portion.

In this secondary battery, in the joint portion, the tip surface of the exposed end is preferably covered with the current collector plate. This configuration can prevent contamination of the electrode group with foreign substances.

Preferably, in the secondary battery, the melting portion is melted upon application of energy, and the joint portion is formed by a flow, toward the exposed end, of the melting portion which has been melted.

In the secondary battery, a portion of the current collector plate at a side opposite the joint portion has a recess. This recess is formed by melting the melting portion.

Preferably, in the secondary battery, the guide portion constitutes a pair of guide portions connected to both ends of the melting portion in cross section perpendicular to a longitudinal direction of the exposed end, and the exposed end is joined to the current collector plate, while being sandwiched between the pair of guide portions in a direction substantially perpendicular to the longitudinal direction.

In a preferred embodiment to be described later, the joint portion is formed along at least a portion in a longitudinal direction of the exposed end. In another preferred embodiment to be described later, the joint portion is formed perpendicularly to the longitudinal direction of the exposed end. In such a joint portion, the tip surface of the exposed end is joined to the current collector plate.

### EFFECTS OF THE INVENTION

The present invention can ensure a joint between an electrode group and a current collector plate, thus reducing the resistance during current collection.

### BRIEF DESCRIPTION OF DRAWINGS

[FIG. 1] FIG. 1(a) is a plan view illustrating a positive electrode plate 1, FIG. 1 (b) is a plan view illustrating a negative electrode plate 2, and FIG. 1 (c) is a perspective view illustrating an electrode group 4.
[FIG. 2] FIG. 2(a) is a plan view illustrating a positive electrode current collector plate 10 and a negative electrode current collector plate 20 of a first embodiment, and FIG. 2(b) is a cross-sectional view taken along line IIB-IIB in FIG. 2(a).
[FIG. 3] FIG. 3(a) is a cross-sectional view showing a state in which a plurality of exposed end portions 1a, 1a, ... are housed in a housing 14 in the fist embodiment, and FIG. 3(b) is a cross-sectional view showing a state in which a joint portion 19 is formed in the first embodiment.
[FIG. 4] FIG. 4 is a cross-sectional view illustrating a secondary battery of the first embodiment.
[FIG. 5] FIG. 5(a) is a perspective view showing a state before a current collector plate 30 and an electrode group 4 are joined together in a first modified example, and FIG. 5(b) is a front view of a current collector plate 30 when viewed along line VB in FIG. 5(a).
[FIG. 6] FIG. 6 is a front view showing a state in which a plurality of exposed end portions 1a, 1a, ... are housed in a housing 14 of a current collector plate 40 in a second modified example.
[FIG. 7] FIG. 7 is a plan view illustrating a current collector plate 50 of a third modified example.
[FIG. 8] FIG. 8 is a cross-sectional view illustrating a current collector plate 60 of a fourth modified example.
[FIG. 9] FIGS. 9(a) through 9(e) are plan views each illustrating a current collector plate in a fifth modified example.
[FIG. 10] FIGS. 10(a) through 10(e) are cross-sectional views each showing a covered portion 13 and a housing 14 in a sixth modified example.
[FIG. 11] FIG. 11(a) is a perspective view showing a state in which a plurality of exposed end portions 1a, 1a, ... are housed in a housing 14 in a seventh modified example, and FIG. 11(b) is a cross-sectional view showing a state in which a joint portion 19 is formed in the seventh modified example.
[FIG. 12] FIG. 12(a) is a plan view showing a positive electrode current collector plate 100 and a negative electrode current collector plate 110 according to a second embodiment, and FIG. 12(b) is a cross-sectional view taken along line XIIB-XIIB in FIG. 12(a).
[FIG. 13] FIG. 13(a) is a cross-sectional view showing a state in which a plurality of exposed end portions 1a, 1a, ... are housed in a housing 14 in the second embodiment, and FIG. 13(b) is a cross-sectional view showing a state in which a joint portion 19 is formed in the second embodiment.
[FIG. 14] FIG. 14(a) is a plan view illustrating a current collector plate 120 of an eighth modified example, and FIG. 14(b) is a cross-sectional view taken along line XIVB-XIVB in FIG. 14(a).
[FIG. 15] FIG. 15(a) is a plan view illustrating a current collector plate 121 of the eighth modified example, and FIG. 15(b) is a cross-sectional view taken along line XVB- XVB in FIG. 15(a).
[FIG. 16] FIG. 16(a) is a perspective view showing a state before a current collector plate 130 and an electrode group 4 are joined together in a ninth modified example, and FIG. 16(b) is a front view of the current collector plate 130 taken along line XVIB in FIG. 16(a).
[FIG. 17] FIG. 17(a) is a plan view illustrating a current collector plate 140 of a tenth modified example, and FIG. 17(b) is a cross-sectional view taken along line XVIIB-XVIIB in FIG. 17(a).
[FIG. 18] FIG. 18(a) is a plan view illustrating a current collector plate 141 of a tenth modified example, and FIG. 18(b) is a cross-sectional view taken along line XVIIIB-XVIIIB in FIG. 18(a).
[FIG. 19] FIG. 19(a) shows a state in which a plurality of exposed end portions 1a, 1a, ... are housed in a housing 14 in an eleventh modified example, and FIG. 19(b) shows a state in which a joint portion 19 is formed in the eleventh modified example.
[FIG. 20] FIG. 20(a) is a cross-sectional view showing a current collector plate 210 in a first conventional example, and FIG. 20(b) is a cross-sectional view showing a state in which a plurality of exposed ends 211, 211, ... are joined to a current collector plate 210 in the first conventional example.
[FIG. 21] FIG. 21 is a cross-sectional view showing a secondary battery of a second conventional example.
[FIG. 22] FIG. 22 is a perspective view showing a process in fabrication of a current collecting structure in a third conventional example.
[FIG.23] FIG. 23 is a cross-sectional view showing a current collecting structure in a fourth conventional example.

### Description of Characters

- 1: positive electrode plate
- 1a: positive electrode exposed end (exposed end)
- 2: negative electrode plate
- 2a: negative electrode exposed end
- 3: porous insulating layer
- 4: electrode group
- 10, 100: positive electrode current collector plate (current collector plate)
- 11: melting portion
- 12: guide portion
- 13: covered portion
- 14: housing
- 14b: opening
- 19: joint portion
- 20, 110: negative electrode current collector plate
- 30, 40, 50, 60, 70 to 74, 80 to 84,:
- 120, 121, 130, 140, 141, 150: current collector plate
- S: tip surface of an exposed end when the exposed end is housed in a housing

### BEST MODE FOR CARRYING OUT THE INVENTION

Prior to description of embodiments of the present invention, it is now described how the present invention was completed.

In forming a tabless current collecting structure, if a bundle of a plurality of exposed end portions is joined to a current collector plate, the time necessary for the joint is advantageously reduced. For example, if a slit or notch is provided in the current collector plate to receive a plurality of exposed end portions, these exposed end portions can be easily collected. However, the slit or notch provided in the current collector plate might cause energy applied on the current collector plate during welding to directly strike the end surface of the electrode group through the slit or notch, thus causing damage on the electrode group. For this reason, the current collector plate preferably has no slits or the like for bundling exposed end portions of the electrode group.

However, bundling of exposed end portions of the electrode group by employing a flat current collector plate with no slits or the like has the two following problems.

First, in a flat current collector plate, it is difficult to bundle a plurality of exposed end portions and join the bundle of exposed end portions to the current collector plate. For this reason, an appropriate jig is used to bundle the exposed end portions, and the bundle is joined to a portion of the current collector plate. However, bundling of the exposed end portions with a jig requires a margin for the bundle in the exposed end portions, and thus the exposed end portions need to be long. Consequently, an electrode plate needs to be wide, thereby increasing the size of a secondary battery.

In addition, in a cylindrical secondary battery, it is more difficult to bundle a plurality of exposed end portions than in a rectangular secondary battery or a flat secondary battery. This is because the absence of a linear portion of an electrode at the end surface of an electrode group in the cylindrical secondary battery causes the length of the electrode in the winding direction to differ among turns. Accordingly, in the cylindrical secondary battery, binding of a plurality of exposed end portions with an appropriate jig causes stress to be always applied to the inner side of each turn of the electrode group, thereby creasing the entire exposed end portions. Consequently, the electrode group is poorly bundled, resulting in a decrease in the manufacturing yield.

As a technique for solving the problem in the cylindrical secondary battery, it is conceivable to press the current collector plate against the end surface of the electrode group so as to join the current collector plate to the end surface of the electrode group. With this technique, however, a transverse end of the electrode group might be bent, thereby causing a mixture material to be peeled off from the surface of the current collector. As a result, performance degradation of the secondary battery might occur.

Second, it is difficult to control flowability of melted metal. Melted metal is considered to flow along the surface of the current collector plate. Accordingly, in the case of a flat current collector plate, the melted metal flows horizontally and hardly flows vertically, and thus it is difficult to join exposed end portions to the flat current collector plate with the melted metal. On the other hand, if the current collector plate is extremely tilted, the melted metal might flow to reach as far as the mixture material in the electrode group, thereby causing performance degradation of the secondary battery.

To solve the foregoing two problems, the inventors of the present invention have given consideration on the shape of a current collector plate, to find preferable current collector plates to be described below. Hereinafter, embodiments of the present invention will be described in detail with reference to the drawings. Substantially the same components are denoted by the same reference numerals, and description thereof is not repeated. The present invention is not limited to the following embodiments.

### «EMBODIMENT 1»

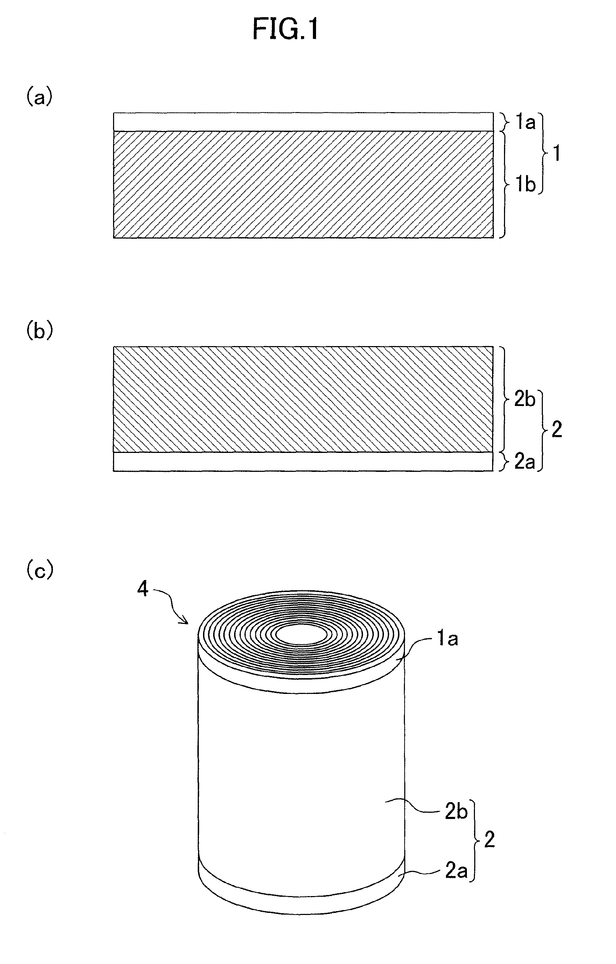

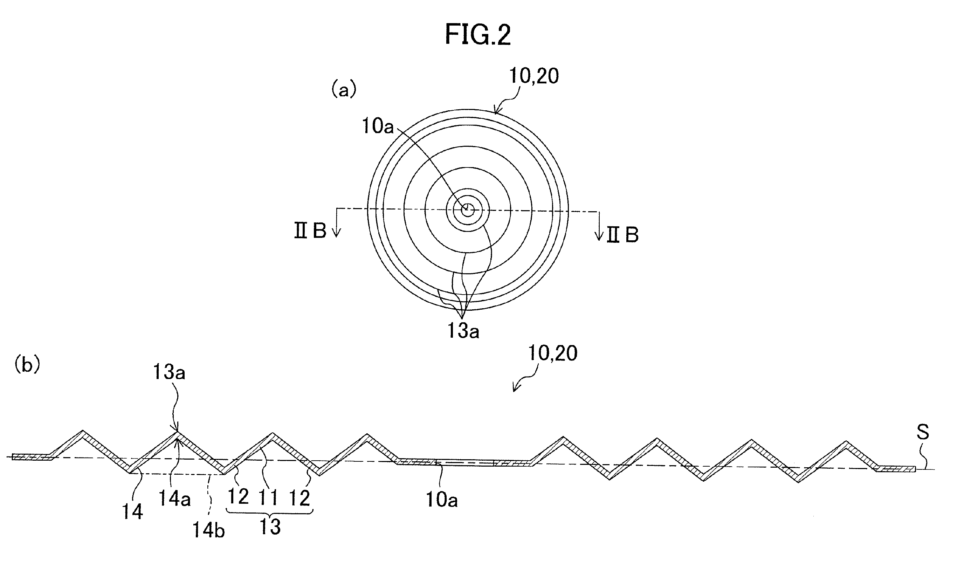

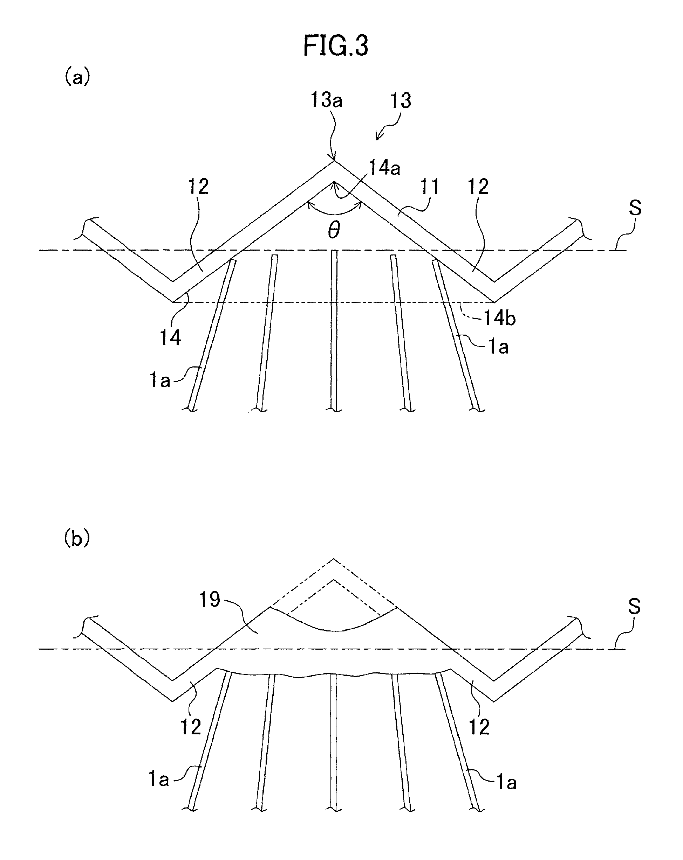

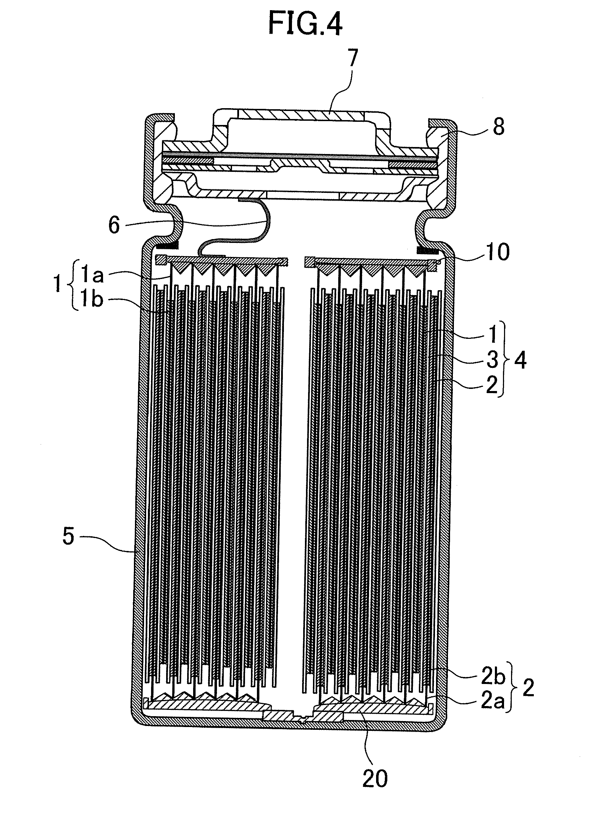

FIG. 1(a) is a plan view illustrating a positive electrode plate 1 of a first embodiment. FIG. 1(b) is a plan view illustrating a negative electrode plate 2 of this embodiment. FIG. 1(c) is a perspective view illustrating an electrode group 4 of this embodiment. FIG. 2(a) is a plan view illustrating a positive electrode current collector plate 10 and a negative electrode current collector plate 20 of this embodiment. FIG. 2(b) is a cross-sectional view taken along line IIB-IIB in FIG. 2(a). FIG. 3(a) is a cross-sectional view showing a state in which a plurality of exposed end portions 1a, 1a, .. . are housed in a housing 14 in this embodiment. FIG. 3(b) is a cross-sectional view showing a state in which a joint portion 19 is formed in this embodiment. FIG. 4 is a cross-sectional view illustrating a secondary battery of this embodiment.

The secondary battery of this embodiment includes a cylindrical electrode group 4, a positive electrode current collector plate 10 having a disk shape, and a negative electrode current collector plate 20 having a disk shape. This secondary battery has a tabless current collecting structure. Specifically, as illustrated in FIG. 4, a transverse end (i.e., a positive electrode exposed end 1a) of the electrode group 4 in a positive electrode plate 1 is joined to the positive electrode current collector plate 10. A transverse end (i.e., a negative electrode exposed end 2a) of a negative electrode plate 2 in the electrode group 4 is joined to the negative electrode current collector plate 20. In the electrode group 4, as illustrated in FIG. 1(c) and FIG. 4, the positive electrode plate 1 and the negative electrode plate 2 are wound with a porous insulating layer 3 (shown in FIG. 4) interposed therebetween. The positive electrode plate 1, the negative electrode plate 2, and the porous insulating layer 3 are arranged such that the positive electrode exposed end 1a and the negative electrode exposed end 2a respectively project from the porous insulating layer 3 in opposite directions. As illustrated in FIG. 1(a), most part of the positive electrode plate 1 is coated with a positive electrode material mixture to form a positive electrode coated portion 1b, whereas the positive electrode exposed end 1a is not coated with the positive electrode material mixture. As illustrated in FIG. 1(b), most part of the negative electrode plate 2 is coated with a negative electrode material mixture to form a negative electrode coated portion 2b, whereas the negative electrode exposed end 2a is not coated with the negative electrode material mixture.

The porous insulating layer 3 may be a microporous thin film made of resin, may be a layer of an insulating material such as a metal oxide, or may be a stack of a microporous thin film and a layer of an insulating material.

Now, the positive electrode current collector plate 10 and the negative electrode current collector plate 20 are described. When it is unnecessary to identify the polarity, the polarity is not mentioned, as in "electrode plate," "current collector plate," and "exposed end," and the reference numerals for the positive electrode members are employed.

As illustrated in FIGS. 2(a) and 2(b), a through hole 10a is formed in a center portion of the current collector plate 10. The current collector plate 10 is located on the end surface of the electrode group 4 so as to allow the through hole 10a to communicate with a cavity (i.e., a portion in which a mandrel is inserted) of the electrode group 4. That is, this through hole 10a is not formed to bundle the exposed end portions 1a, 1a, ..., and none of slits, notches, through holes, and the like for bundling the exposed end portions 1a, 1a, ... is formed in the current collector plate 10. Accordingly, when the end surface of the electrode group 4 is covered with the current collector plate 10, the end surface (more specifically, the tips of the exposed end portions 1a, 1a, ...) of the electrode group 4 is not exposed from the current collector plate 10.

This current collector plate 10 is welded to the end surface of the electrode group 4 with the joint portion 19 interposed therebetween. The joint portion 19 extends along the winding direction (i.e., the longitudinal direction of the exposed end 1a) of the electrode group 4, and is formed by a flow, toward the tip of the exposed end 1a, of a portion of the current collector plate 10 partially melted by irradiation with energy (such as light energy or thermal energy). In one joint portion 19, a plurality of exposed end portions 1a, 1a, ... are located close to one another as illustrated in FIG. 3(b).

In a cylindrical battery as in this embodiment or a flat battery as in a third modified example to be described later, the exposed end portions 1a, 1a, ... are arranged by winding a single electrode plate 1. Specifically, in the diameter direction at an end surface of a cylinder formed by winding the single electrode plate 1, exposed end portions 1a, 1a, ... in different turns are arranged side by side in the diameter direction. These exposed end portions 1a, 1a, ... thus arranged in the diameter direction are a plurality of exposed end portions 1a, 1a, ... of this embodiment. In a layered battery as in a first modified example to be described later, exposed end portions 1a, 1a, ... of respective electrode plates 1, 1, ... correspond to the plurality of exposed end portions 1a, 1a, ... of this embodiment.

The current collector plate 10 is now more specifically described with reference to FIGS. 2 and 3.

The current collector plate 10 includes covered portions 13, 13, ... and housings 14, 14, .... More specifically, the current collector plate 10 has an uneven portion which is projected and recessed in the thickness direction of the current collector plate 10 relative to the edge of the through hole 10a. This uneven portion is formed along the periphery of the current collector plate 10. Accordingly, a plurality of recesses which are concentrically arranged are observed at either surface of the current collector plate 10. The recesses when viewed at one surface (i.e., the bottom surface in FIG. 2(b)) of the current collector plate 10 are the housings 14, 14, .... Side walls of the housings 14 respectively form the covered portions 13. Accordingly, projection tips 13a, 13a, ... of the covered portions 13, 13, ... are concentrically arranged at the other surface (i.e., the upper surface in FIG. 2(b)) of the current collector plate 10. In this manner, the covered portions 13, 13, ... and the housings 14, 14, ... are arranged along the winding direction of the exposed end 1a in the electrode group 4

The covered portions 13 and the housings 14 are preferably formed by pressing. In the current collector plate 10 illustrated in FIGS. 2(a) and 2(b), if the thickness of the current collector plate 10 is 0.5 mm, pressing which causes the current collector plate 10 to project about 0.2 mm is sufficient. The pressing is preferably performed such that an opening 14b of each of the housings 14 has a width of about 1 mm. In this case, approximately five exposed end portions 1a, 1a, ... can be housed in each of the housings 14.

The covered portions 13 are now described in further detail. Each of the covered portions 13 includes a melting portion 11, i.e., a portion to be melted, and a pair of guide portions 12, 12. The melting portion 11 is a center portion of the covered portion 13 when viewed from above the projection tip 13a, and projects to outside the electrode group 4 relative to the tip surface S of the exposed end 1a in the state of being housed in the housing 14. The melting portions 11 are melted by application of energy.

As shown in FIG. 3(a), the levels of the tip surfaces of the exposed end portions 1a, 1a, ... in the axial direction of the electrode group 4 in each of the housings 14 differ from one another. It is sufficient that the tip surface S of the exposed end portions 1a housed in the housing 14 is the tip surface of the outermost exposed end portions 1a in the electrode group 4.

The guide portions 12, 12 form a pair, while being respectively connected to both ends of each of the melting portions 11 in a transverse cross-sectional view of the covered portions 13. The pair of guide portions 12, 12 is an edge portion of the covered portion 13 when viewed from above the projection tip 13a, and is located closer to the center of the electrode group 4 than the tip surface S of the exposed end portions 1a, 1a, ... in each of the housing 14.

The pair of guide portions 12, 12 is preferably formed such that the distance between the guide portions 12, 12 decreases toward the bottom (i.e., the deepest portion) of the housing 14. In this manner, a plurality of exposed end portions 1a, 1a, ... can be housed in each of the housings 14 without being bent, unlike a case where the distance between the guide portions 12, 12 increases toward the bottom of the housing 14.

When such a current collector plate 10 is placed on the end surface of the electrode group 4, the current collector plate 10 somewhat moves downward (i.e., in the direction toward the end surface of the electrode group 4) under its own weight. As shown in FIG. 3(a), this movement of the current collector plate 10 causes the pair of guide portions 12, 12 to sandwich the exposed end portions 1a, 1a, ... in the direction perpendicular to the longitudinal direction of the exposed end 1a, thereby allowing these exposed end portions 1a, 1a, ... to be located close to each other and housed in each of the housings 14. That is, in this embodiment, only placing the current collector plate 10 on the end surface of the electrode group 4 enables a plurality of exposed end portions 1a, 1a, ... to be bundled and housed in each of the housings 14 without a process of bundling the exposed end portions 1a, 1a, .... Thereafter, upon application of energy on the melting portions 11, the melting portions 11 are melted to flow to the exposed end 1a, thereby forming a joint portion 19 shown in FIG. 3(b). In this joint portion 19, the exposed end portions 1a, 1a, . .. are joined to the current collector plate 10, while being sandwiched between the pair of guide portions 12, 12 in the direction perpendicular to the longitudinal direction.

Now, the housings 14 are described. Each of the housings 14 is preferably formed such that the central angle θ thereof at the tip 14a in the depth direction of the housing 14 is an obtuse angle. Accordingly, the slope of each of the covered portions 13 (especially, each of the guide portions 12) is more gentle than in a case where this central angle θ is an acute angle. Thus, it is possible to sandwich a plurality of exposed end portions 1a, 1a,... between the pair of guide portions 12, 12 without bending the exposed end portions 1a, 1a, .... Further, in a case where the central angle θ is an obtuse angle, the opening 14b of each of the housings 14 is larger than in the case where the central angle θ is an acute angle. Consequently, a larger number of exposed end portions 1a can be housed in each of the housings 14.

The central angle θ is preferably an obtuse angle in a case where the current collector plate 10 is made of a metal such as Cu having a high surface tension. In the case where the central angle θ is an obtuse angle, the slope of each of the covered portions 13 is gentle, and thus melted metal hardly flows along the covered portions 13. In general, when a metal having a high surface tension is melted, this melted metal is likely to flow vertically rather than horizontally. Accordingly, in the case where the central angle θ is an obtuse angle, if the current collector plate 10 is made of a metal having a high surface tension, the melted metal flows to the tip surface of the exposed end portions 1a, 1a, ..., resulting in that the exposed end portions 1a, 1a, ... are joined to the current collector plate 10.

In contrast, in a case where the current collector plate 10 is made of a metal such as Al having a low surface tension, the central angle θ thereof is preferably an acute angle (not shown). In a case where the central angle θ is an acute angle, the slope of each of the covered portions 13 is steep, and thus melted metal is likely to flow along the covered portions 13. In general, when a metal having a low surface tension is melted, this melted metal is likely to flow horizontally rather than vertically. Accordingly, in the case where the central angle θ is an acute angle, if the current collector plate 10 is made of a metal having a low surface tension, the melted metal flows to the tip surface of the exposed end portions 1a, 1a, ... along the covered portions 13, resulting in that the exposed end portions 1a, 1a, ... are joined to the current collector plate 10.

In the case where the central angle θ is an obtuse angle, if the current collector plate 10 was made of a metal having a low surface tension, the melted metal would hardly flow, and thus it would be difficult to join the exposed end portions 1a, 1a, ... to the current collector plate 10. Thus, this configuration is not preferable.

In addition, in the case where the central angle θ is an acute angle, if the current collector plate 10 was made of a material having a high surface tension, the melted metal would be adhered not only to the tip surface of the exposed end portions 1a, 1a, ... but also to the positive electrode coated portion 1b or the negative electrode coated portion 2b, thereby causing performance degradation of a secondary battery. Thus, this configuration is not preferable either.

The central angle θ is now described in further detail. If the current collector plate 10 is made of Cu, the central angle θ thereof is preferably close to 180 degrees in order to suppress bending of the exposed end portions 1a, 1a, ... in sandwiching the exposed end portions 1a, 1a, ... between the pair of guide portions 12, 12. However, to cause melted metal to flow to the tip surface of the exposed end portions 1a, 1a, ... , the central angle θ is preferably closer to 90 degrees. Accordingly, the central angle θ is preferably in the range from 90 degrees to 160 degrees, both inclusive, and more preferably in the range from 110 degrees to 150 degrees, both inclusive, e.g., 120 degrees.

If the current collector plate 10 is made of Al, the central angle θ thereof is preferably close to zero degrees in order to cause melted metal to flow to the tip surface of the exposed end portions 1a, 1a, .... However, an extremely small central angle θ would make it difficult to house a plurality of exposed end portions 1a, 1a, ... in each of the housings 14, resulting in a decrease in the number of exposed end portions 1a which can be housed in the housing 14. Accordingly, the central angle θ in this case is preferably larger than or equal to 30 degrees and less than 90 degrees, and more preferably in the range from 40 degrees to 80 degrees, both inclusive, e.g., 60 degrees.

In a case where the housings 14 are polygons in a transverse cross-section as shown in FIGS. 2 and 3, the central angle θ is an angle formed by adjacent two sides of each of the housings 14 sandwiching the tip 14a. In a case where the housings 14 are semicircular in a transverse cross-section, for example, the central angle θ is an angle formed by two intersecting tangential lines respectively in contact with the housing 14 at two points near the tip 14a.

Now, a method for fabricating a secondary battery according to this embodiment is described with reference to FIGS. 1 through 3.

First, a positive electrode plate 1 shown in FIG. 1(a) and a negative electrode plate 2 shown in FIG. 1(b) are prepared.

Next, the positive electrode plate 1, the negative electrode plate 2, and a porous insulating layer 3 are arranged such that a positive electrode exposed end 1a of the positive electrode plate 1 and a negative electrode exposed end 2a of the negative electrode plate 2 project from the porous insulating layer 3 in opposite directions. Then, the positive electrode plate 1 and the negative electrode plate 2 are wound into a cylindrical shape with the porous insulating layer 3 interposed therebetween, thereby forming an electrode group 4 shown in FIG. 1(c) (step (a)).

Thereafter, a positive electrode current collector plate 10 and a negative electrode current collector plate 20 shown in FIG. 2 are prepared. Each of the positive electrode current collector plate 10 and the negative electrode current collector plate 20 has covered portions 13 and housings 14. Each of the covered portions 13 has a melting portion 11 and a pair of guide portions 12, 12 (step (b)).

Subsequently, the positive electrode current collector plate 10 is placed on the upper surface of the electrode group 4 with projection tips 13a of the covered portions 13 facing upward. In this manner, by placing the positive electrode current collector plate 10 on the upper surface of the electrode group 4, the tip surfaces of a plurality of exposed end portions 1a, 1a, ... are covered with the positive electrode current collector plate 10, and the positive electrode current collector plate 10 somewhat sinks into the electrode group 4 below the end surface of the electrode group 4 under its own weight. Accordingly, the exposed end portions 1a, 1a, ... are sandwiched between each pair of guide portions 12, 12 to be housed in each of the housings 14 as illustrated in FIG. 3(a). At this time, the exposed end portions 1a, 1a, ... sandwiched between each pair of guide portions 12, 12 are inserted into an associated one of the housings 14 through an opening 14b of the housing 14, and are housed in the housing 14 (step (c)).

Then, the positive electrode current collector plate 10 and a plurality of positive electrode exposed end portions 1a, 1a, ... are joined together. Specifically, energy is applied onto the upper surfaces of the melting portions 11, thereby melting the melting portions 11. As a welding technique, arc welding (tungsten inert gas (TIG) welding), laser welding, or electron-beam welding may be employed. Then, the melted metal flows into the housings 14 to be adhered to the positive electrode exposed end portions 1a, 1a, .. .. In this manner, a joint portion 19 shown in FIG. 3(b) is formed, thereby joining the positive electrode current collector plate 10 and the positive electrode exposed end portions 1a, 1a, ... together (step (d)).

Thereafter, the electrode group 4 is turned upside down such that the positive electrode current collector plate 10 is located under the electrode group 4. Then, the negative electrode current collector plate 20 is placed on the upper surface of the electrode group 4 with the projection tips 13a of the covered portions 13 facing upward (step (c)), thereby joining the negative electrode current collector plate 20 and negative electrode exposed end portions 2a, 2a, ... together (step (d)). In this case, arc welding (TIG welding), laser welding, or electron-beam welding may also be employed as a welding technique. In this manner, a current collecting structure of this embodiment is formed.

Then, the current collecting structure is housed in a battery case 5. At this time, the negative electrode current collector plate 20 is brought into contact with the lower surface of the battery case 5, and the positive electrode current collector plate 10 is connected to a sealing plate 7 via a positive electrode lead 6. Subsequently, a nonaqueous electrolyte is poured into the battery case 5, and then the battery case 5 is sealed with the sealing plate 7 with a gasket 8 interposed therebetween. In this manner, a secondary battery of this embodiment shown in FIG. 4 is fabricated.

As described above, in this embodiment, the positive electrode exposed end 1a is joined to the positive electrode current collector plate 10, and the negative electrode exposed end 2a is joined to the negative electrode current collector plate 20. Accordingly, in this embodiment, current is collected along the transverse direction of the positive electrode plate 1 and the negative electrode plate 2, thereby reducing the resistance in current collection. For this reason, the secondary battery of this embodiment is suitable for discharging large current.

In this embodiment, none of slits, notches, through holes, and the like for bundling a plurality of exposed end portions 1a, 1a, ... is formed in the current collector plate 10. In addition, the melting portions 11 are located closer to the outside of the electrode group 4 than the tip surface of the exposed end portions 1a, 1a, ... housed in the housings 14. Accordingly, even upon application of energy onto the melting portions 11, it is possible to suppress application of this energy onto the electrode group 4, thereby preventing damage on the electrode group 4 during welding. Further, since none of such slits, notches, through holes, and the like is provided in the current collector plate 10, it is possible to prevent contamination of the electrode group 4 with foreign substances during fabrication.

In this embodiment, placing the current collector plate 10 on the end surface of the electrode group 4 allows a plurality of exposed end portions 1a, 1a, ... to be bundled under the weight of the current collector plate 10. Accordingly, the exposed end portions 1a, 1a, ... can be bundled without using a jig, thereby eliminating the necessity for providing a margin for the bundle in the exposed end portions 1a. As a result, an increase in the size of the secondary battery can be suppressed.

In this embodiment, it is sufficient to cover the end surface of the electrode group 4 with the current collector plate 10. Thus, positioning of the current collector plate 10 at the end surface of the electrode group 4 is unnecessary, thus relatively easily fabricating a secondary battery at low cost. In addition, in this embodiment, even when the current collector becomes thinner, a secondary battery can be fabricated without bending of a plurality of exposed end portions 1a, 1a, .... This configuration can ensure that the current collector plate 10 and the electrode group are joined together, and can achieve an increase in the capacity of, and a reduction in the size of, a secondary battery. Moreover, in this embodiment, even in the absence of a linear portion of an electrode in the end surface of the electrode group 4, the electrode group 4 and the current collector plate 10 can be joined together without application of stress on the electrode group 4, thereby enabling fabrication of a secondary battery without creasing the exposed end 1a. As a result, it is possible to ensure a joint between the electrode group 4 and the current collector plate 10. In addition, it is also possible to suppress a decrease in the manufacturing yield and performance degradation of a secondary battery.

Moreover, flowability of melted metal can be controlled by adjusting the central angle θ depending on a material for the current collector plate 10. As a result, it is possible to ensure that the electrode group 4 and the current collector plate 10 are joined together independently of the type of a material for the current collector plate 10.

The secondary battery of this embodiment may be a secondary battery according to one of the following first through seventh modified examples.

### (Modified Example 1)

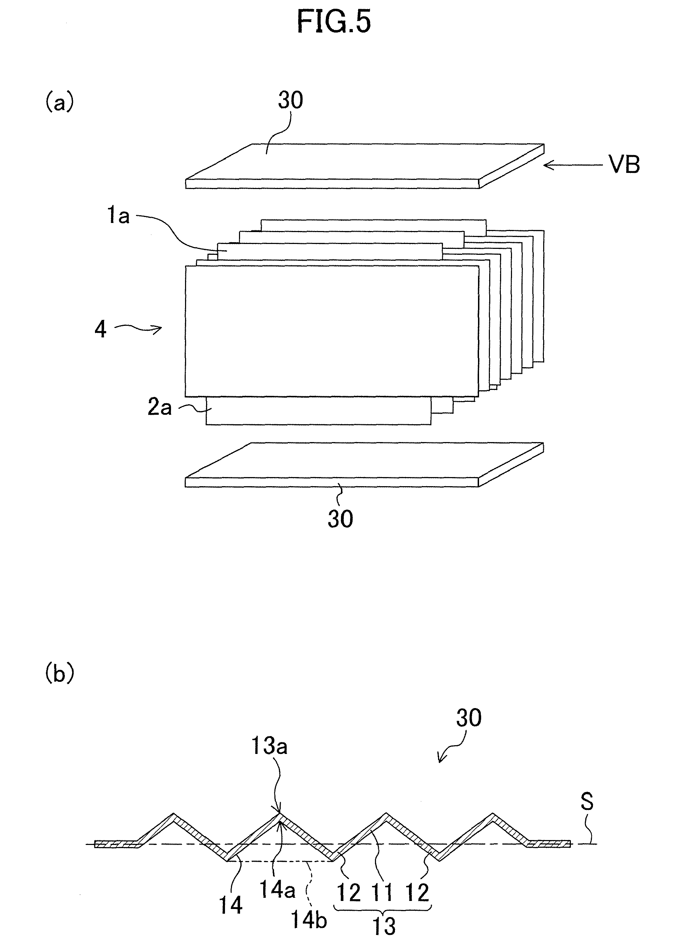

FIG. 5(a) is a perspective view showing a state before an electrode group 4 and a current collector plate 30 are joined together in a first modified example. FIG. 5(b) is a front view of the current collector plate 30 when viewed along line VB in FIG. 5(a).

A secondary battery according to this modified example is a so-called layered secondary battery. In an electrode group 4 of this secondary battery, positive electrode plates 1, negative electrode plates 2, and porous insulating layers 3 (not shown) are arranged such that positive electrode exposed ends 1a and negative electrode exposed ends 2a project from the porous insulating layers 3 in opposite directions, and the positive electrode plates 1 and the negative electrode plates 2 are stacked with the porous insulating layer 3 interposed therebetween.

In the layered secondary battery, the current collector plate 30 is preferably rectangular in plan view. As the current collector plate 10 of the first embodiment, the current collector plate 30 has covered portions 13, 13, ... and housings 14, 14, .... The layered secondary battery employing the current collector plate 30 shown in FIG. 5(b) can exhibit substantially the same advantages as those of the first embodiment.

A flat secondary battery may be fabricated by employing the current collector plate 30 of this modified example. In this case, substantially the same advantages as those of the first embodiment can also be achieved.

### (Modified Example 2)

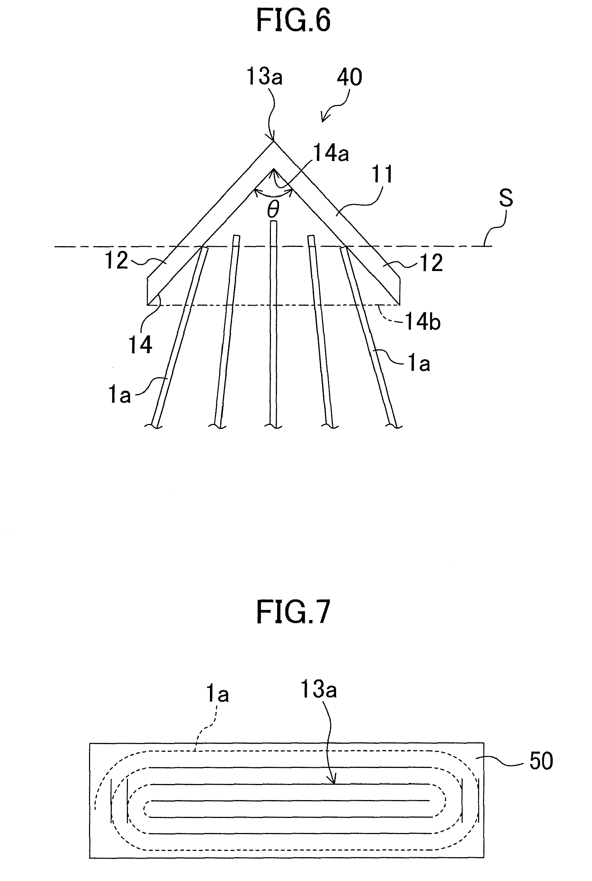

FIG. 6 is a front view showing a state in which a plurality of exposed end portions 1a, 1a, ... are housed in a housing 14 of a current collector plate 40 in a second modified example.

As in the first modified example, the secondary battery according to this modified example is a layered secondary battery. The current collector plate 40 includes one covered portion 13 and one housing 14. If the electrode group 4 includes a small number of electrode plates 1, fabrication of a layered secondary battery employing the current collector plate 40 shown in FIG. 6 can also achieve substantially the same advantages as those in the first embodiment.

A flat secondary battery may also be fabricated by employing the current collector plate 40 of this modified example. In this case, substantially the same advantages as those in the first embodiment can also be achieved.

### (Modified Example 3)

FIG. 7 is a plan view illustrating a current collector plate 50 of a third modified example.

A secondary battery according to this modified example is a so-called flat secondary battery. In an electrode group 4 of this secondary battery, a positive electrode plate 1, a negative electrode plate 2, and a porous insulating layer 3 (not shown) are arranged such that a positive electrode exposed end 1a and a negative electrode exposed end 2a project from the porous insulating layer 3 in opposite directions, and the positive electrode plate 1 and the negative electrode plate 2 are wound with the porous insulating layer 3 interposed therebetween. The end surface of the electrode group 4 has a flat shape.

In the flat secondary battery, the current collector plate 50 is preferably rectangular in plan view. As described in the first embodiment, the current collector plate 50 has covered portions 13, 13, ... and housings 14, 14, .... As described in the first embodiment, the covered portions 13 are preferably arranged along the longitudinal direction (i.e., the winding direction of the electrode group 4) of the tip surface of the exposed end 1a, and preferably extend in the longitudinal and transverse directions of the current collector plate 50 as shown in FIG. 7. Alternatively, the covered portions 13 may extend only in the longitudinal direction of the current collector plate 50. In a case where the covered portions 13, 13, ... are arranged to extend in the longitudinal and transverse directions of the current collector plate 50 as shown in FIG. 7, a portion of the covered portions 13 extending in the longitudinal direction of the current collector plate 50 is joined to a linear portion of the electrode in the end surface of the electrode group 4. A portion of the covered portions 13 extending in the transverse direction of the current collector plate 50 is joined to part of a curved portion of the electrode in the end surface of the electrode group 4. Fabrication of a flat secondary battery employing the current collector plate 50 shown in FIG. 7 can achieve substantially the same advantages as those of the first embodiment.

A layered secondary battery may be fabricated by employing the current collector plate 50 of this modified example. In this case, substantially the same advantages as those of the first embodiment can also be achieved.

### (Modified Example 4)

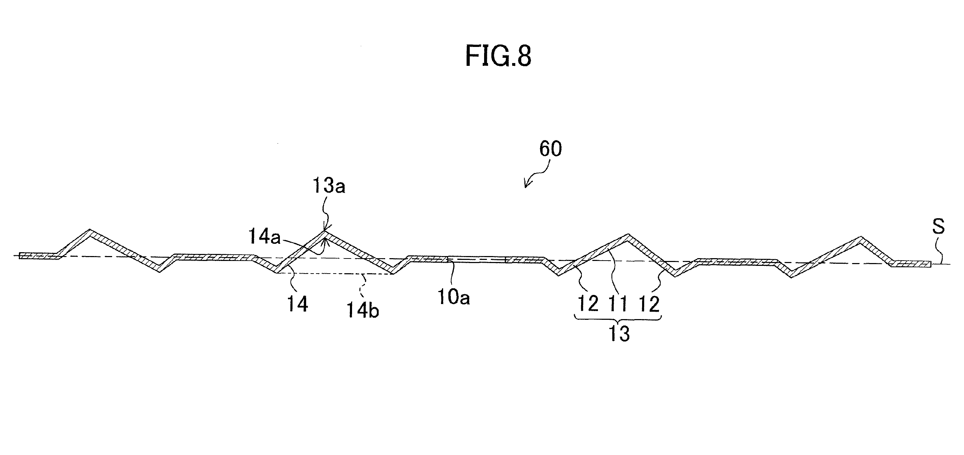

FIG. 8 is a cross-sectional view illustrating a current collector plate 60 of a fourth modified example. A secondary battery according to this modified example is cylindrical as that of the first embodiment.

In this modified example, covered portions 13, 13, ... are concentrically arranged when viewed from above projection tips 13a of the current collector plate 60 as in the first embodiment, but are spaced from each other in the direction of the diameter of the current collector plate 60. In this manner, the covered portions 13 and flat portions are alternately provided in the direction of the diameter of the current collector plate 60. Thus, in this embodiment, a portion of an exposed end 1a in the longitudinal direction is joined to the current collector plate 60.

As long as a sufficient joint strength between the current collector plate 60 and an electrode group 4 is secured, the covered portions 13, 13, ... may be spaced from each other in the direction of the diameter of the current collector plate 60 as in this modified example. The use of such a current collector plate 60 can reduce the time necessary for processing the current collector plate 60, and can also reduce the time necessary for joining the current collector plate 60 and the electrode group 4, as compared to the current collector plate 10 of the first embodiment. Accordingly, in this modified example, substantially the same advantages as those of the first embodiment can be obtained, and the time necessary for processing the current collector plate 60 and the time necessary for joining the current collector plate 60 and the electrode group 4 can be reduced.

In the case of a flat secondary battery or a layered secondary battery, only a portion of the exposed end 1a in the longitudinal direction may be joined to the current collector plate. In this case, substantially the same advantageous as those of this modified example can be obtained.

### (Modified Example 5)

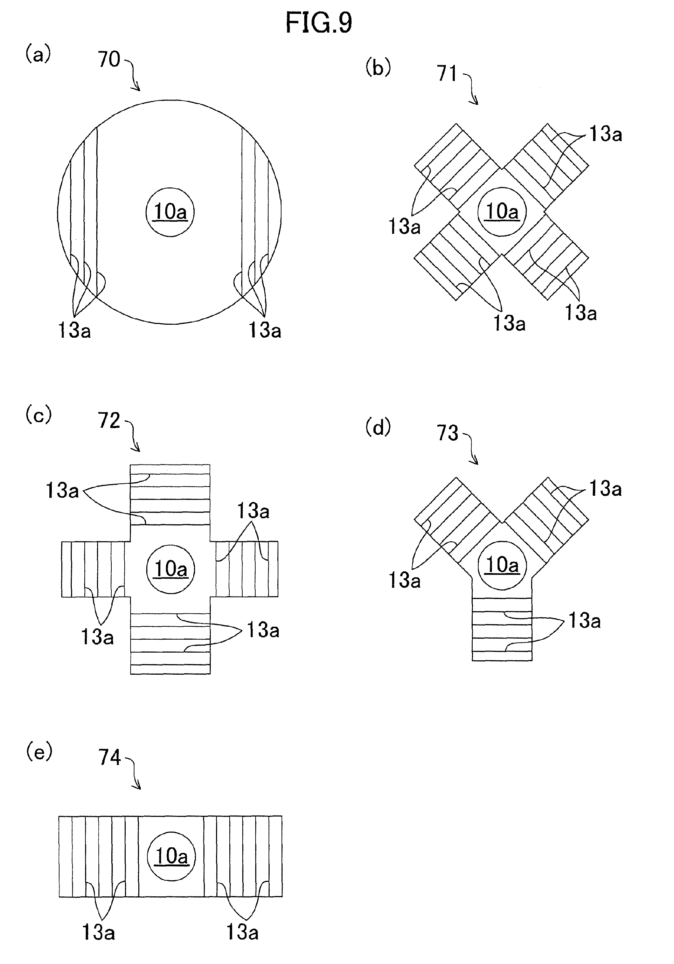

FIGS. 9(a) through 9(e) are plan views each illustrating a current collector plate of a fifth modified example. A secondary battery according to this modified example is cylindrical as that of the first embodiment.

As shown in FIG. 9(a), covered portions 13 may be located only in edge portions of a current collector plate 70. As shown in FIGS. 9(b) through 9(e), each of current collector plates 71, 72, 73, and 74 may be formed to cover part of an end surface of an electrode group 4.

As long as a sufficient joint strength between the current collector plate and the electrode group 4 is secured, the current collector plates 70 through 74 may be employed. In this manner, as in the fourth modified example, substantially the same advantages as those of the first embodiment can be obtained, and in addition, the time necessary for processing the current collector plate and the time for joining the current collector plate and the electrode group can be reduced.

The current collector plates shown in FIGS. 9(b) through 9(e) are lighter in weight than the current collector plate shown in FIG. 9(a), thereby also achieving weight reduction of the secondary battery.

In the case of a current collector plate for use in a flat secondary battery or a layered secondary battery, covered portions 13 may also be located only in edge portions of the current collector plate, or alternatively, the current collector plate may be formed to cover part of an end surface of the electrode group 4. In either case, substantially the same advantages as those of this modified example can be obtained.

### (Modified Example 6)

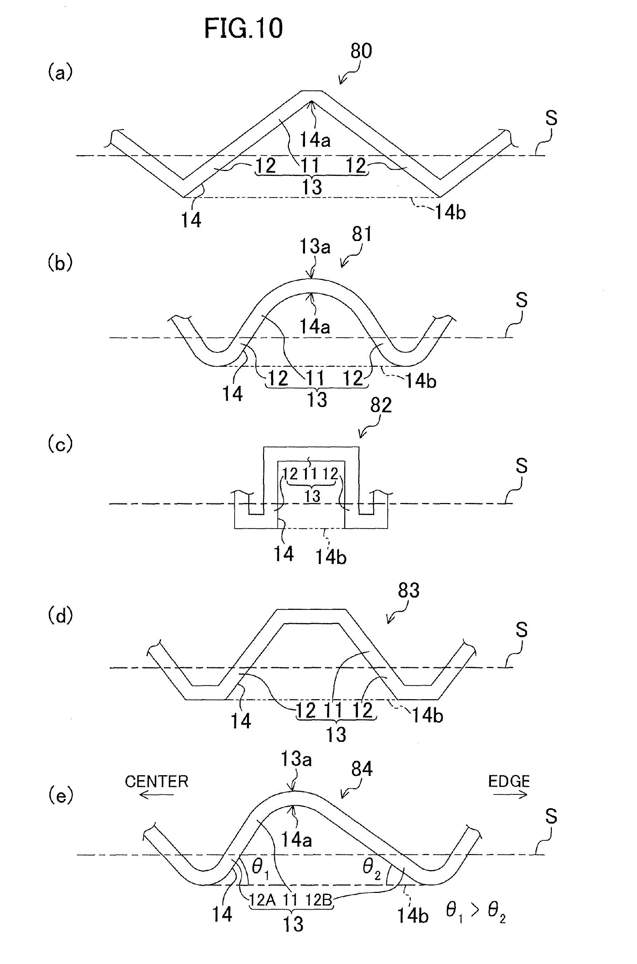

FIGS. 10(a) through 10(e) are cross-sectional views each showing a covered portion 13 and a housing 14 in a sixth modified example. A secondary battery according to this modified example is cylindrical as that of the first embodiment.

As in a current collector plate 80 shown in FIG. 10(a), the shape of the covered portion 13 in transverse cross section may differ from the shape of the housing 14 in transverse cross section.

The shape of the covered portion 13 in transverse cross section may have a U shape as in a current collector plate 81 shown in FIG. 10(b), may be rectangular as in a current collector plate 82 shown in FIG. 10(c), or may be trapezoidal as in a current collector plate 83 as shown in FIG. 10(d). As in the current collector plates 81 and 83 shown in FIGS. 10(b) and 10(d), a configuration in which the distance between a pair of guide portions 12, 12 decreases toward the bottom of the housing 14 and the central angle θ at the tip 14a of the housing 14 is an obtuse angle, is preferable because a plurality of exposed end portions 1a, 1a, ... can be housed in the housing 14 without being bent.

As in a current collector plate 84 shown in 10(e), the covered portion 13 may be formed such that a first angle θ₁ is larger than a second angle θ₂. The first angle θ₁ is the smaller one of the two tilt angles of a guide portion 12A located closer to the center of the current collector plate 84 out of the pair of guide portions 12, 12. The second angle θ₂ is the smaller one of the two tilt angles of a guide portion 12B located closer to the edge of the current collector plate 84 out of the pair of guide portions 12, 12. In this manner, a plurality of exposed end portions 1a, 1a, ... can be more easily housed in the housing 14 than in the first embodiment.

A current collector plate for use in a flat secondary battery or a layered secondary battery may include the covered portion 13 and the housing 14 of this modified example. In this case, substantially the same advantages as those of this modified example can also be obtained.

### (Modified Example 7)

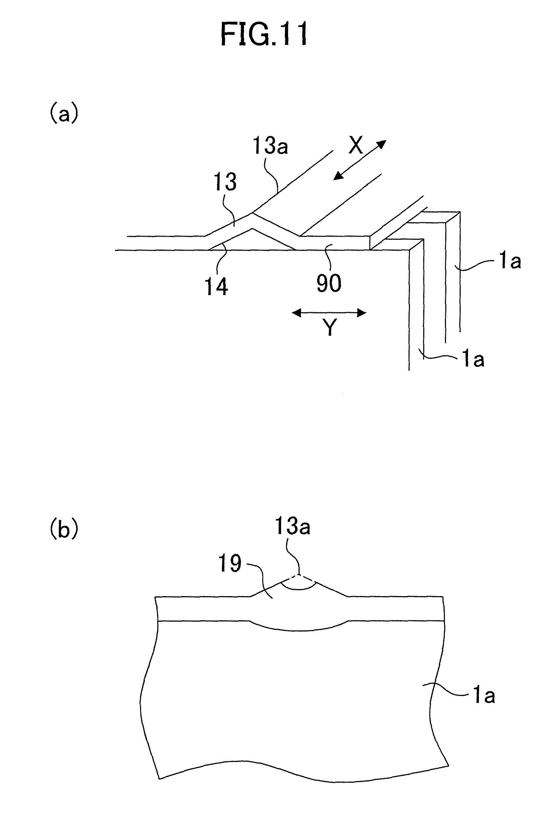

FIG. 11 (a) is a perspective view showing a state in which a plurality of exposed end portions 1a, 1a, ... are housed in a housing 14 in a seventh modified example. FIG. 11(b) is a cross-sectional view showing a state in which a joint portion 19 is formed in this modified example.

In this modified example, the direction (i.e., direction X in FIG. 11 (a)) in which a covered portion 13 extends is approximately perpendicular to the longitudinal direction (i.e., direction Y in FIG. 11(a)) of an exposed end 1a. In this case, substantially the same advantages as those of the first embodiment can also be obtained.

### «EMBODIMENT 2»

In the first embodiment and the first through seventh modified examples described above, the current collector plate is formed to have unevenness in the thickness direction relative to a flat portion (e.g., a portion around a through hole 10a in FIG. 2(b)). On the other hand, in a second embodiment and eighth through eleventh modified examples to be described later, a current collector plate is formed to be projected or recessed in the thickness direction relative to a flat portion. Now, aspects different from the first embodiment are mainly described.

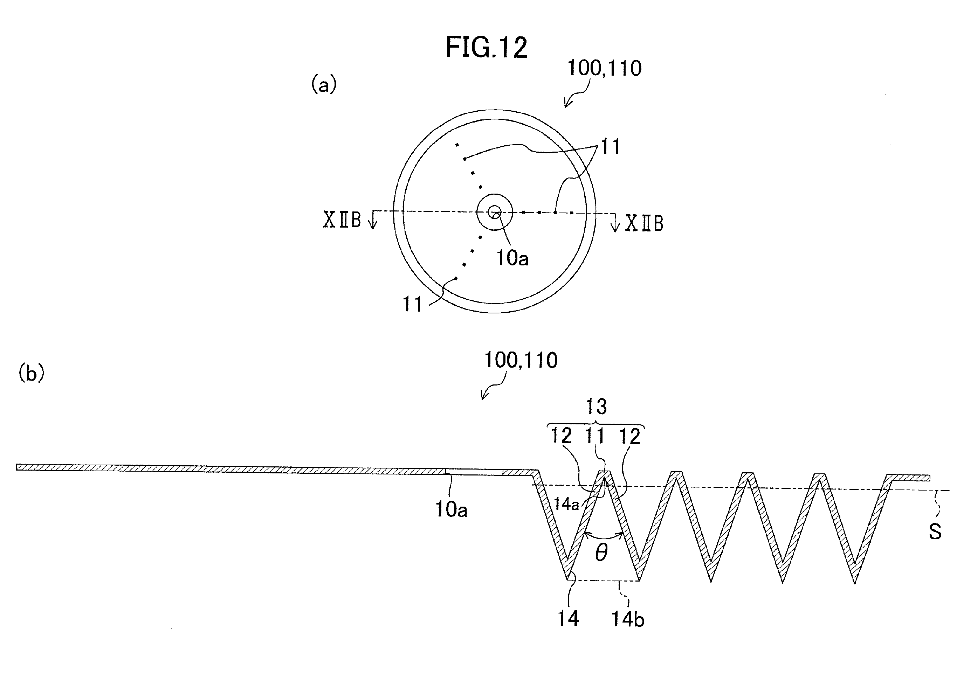

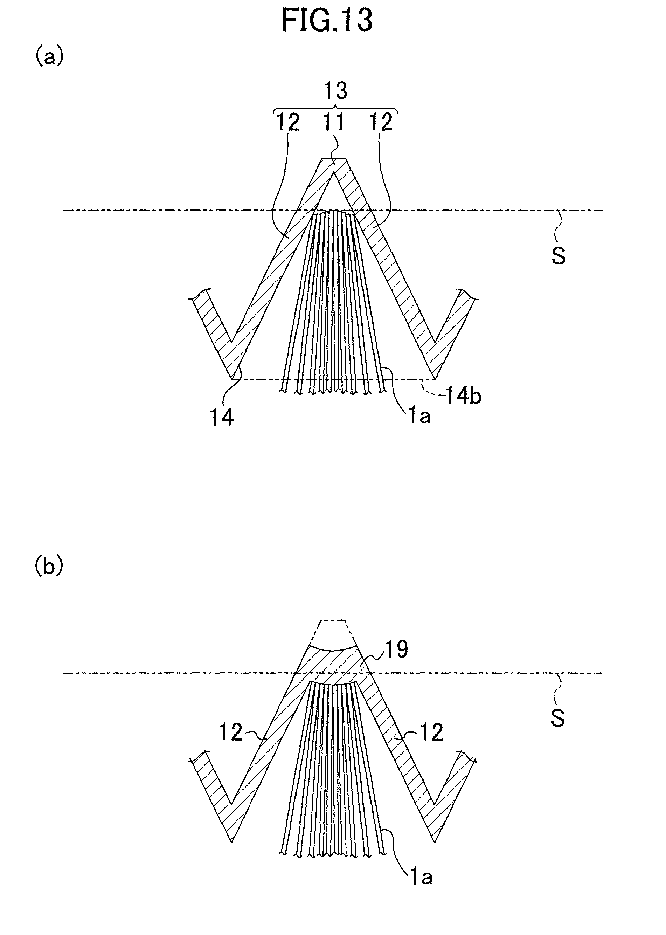

FIG. 12(a) is a plan view showing a positive electrode current collector plate 100 and a negative electrode current collector plate 110 according to this embodiment. FIG. 12(b) is a cross-sectional view taken along line XIIB-XIIB in FIG. 12(a). FIG. 13(a) is a cross-sectional view showing a state in which a plurality of exposed end portions 1a, 1a, .. . are housed in a housing 14 in this embodiment. FIG. 13(b) is a cross-sectional view showing a state in which a joint portion 19 is formed in this embodiment.

In this embodiment, an electrode group 4 (not shown) is substantially the same as that of the first embodiment, but the current collector plate 100 differs from that of the first embodiment. Specifically, as shown in FIG. 12(b), the current collector plate 100 is formed to be projected or recessed relative to a portion at the edge of the through hole 10a in the thickness direction of the current collector plate 100. As in the first embodiment, this uneven portion is covered portions 13 which are locally provided in a circumferential direction of the current collector plate 100, and are arranged side by side in the direction of the diameter of the current collector plate 100 as illustrated in FIGS. 12(a) and 12(b). Thus, a large part of the current collector plate 100 is flat. Each of the covered portions 13 of this embodiment has a melting portion 11 and a pair of guide portions 12, 12 described in the first embodiment. Housings 14 of this embodiment are the same as the housings 14 of the first embodiment.

In this embodiment, the covered portions 13 and the housings 14 are also preferably formed by pressing as in the first embodiment and the first through seventh modified examples. In the current collector plate 100 shown in FIG. 2(b), if the current collector plate 100 has a thickness of 0.8 mm, it is sufficient to perform the pressing so as to form projections of 1 mm or more. If the pressing is performed to allow the opening 14b of each of the housings 14 to have a width of 0.4 mm, approximately 10 exposed end portions 1a, 1a, ... can be housed in each of the housings 14.

When such a current collector plate 100 is placed on an end surface of the electrode group 4, the current collector plate 100 somewhat moves downward (i.e., the direction toward the end surface of the electrode group 4) under its own weight, as in the first embodiment and the first through seventh modified examples. As shown in FIG. 13(a), this movement causes the pair of guide portions 12, 12 to sandwich the exposed end portions 1a, 1a, ..., thereby allowing these exposed end portions 1a, 1a, ... to be located close to each other and housed in each of the housings 14. That is, in this embodiment, only placing the current collector plate 100 on the end surface of the electrode group 4 enables a plurality of exposed end portions 1a, 1a, ... to be bundled in each of the housings 14 without a process of bundling the exposed end portions 1a, 1a, .... Thereafter, upon application of energy on the melting portions 11, the melting portions 11 are melted to flow to the exposed end 1a, thereby forming a joint portion 19 shown in FIG. 13(b). In this joint portion 19, the exposed end portions 1a, 1a, ... are joined to the current collector plate 100, while being sandwiched between the pair of guide portions 12, 12 in the direction perpendicular to the longitudinal direction.

Now, a method for fabricating a secondary battery according to this embodiment is described. First, an electrode group 4 is prepared first with the method described in the first embodiment (step (a)). Next, a positive electrode current collector plate 100 and a negative electrode current collector plate 110 shown in FIGS. 12(a) and 12(b) are prepared (step (b)).

Then, with the method described in the first embodiment, the positive electrode current collector plate 100 is placed on an end surface of the electrode group 4 (step (c)), thereby joining the positive electrode current collector plate 100 and a plurality of positive electrode exposed end portions 1a, 1a, ... together.

At this time, since covered portions 13, 13, ... and housings 14, 14, ... are circumferentially arranged in the positive electrode current collector plate 10 of the first embodiment, when a plurality of exposed end portions 1a, 1a, ... are bundled before being housed in the housings 14, torsion might occur in the exposed end 1a. However, in the current collector plate 100 of this embodiment, the covered portions 13, 13, ... and the housings 14, 14, ... are locally provided in the circumferential direction, and thus it is possible to prevent torsion from occurring in the exposed end 1a even when a plurality of exposed end portions 1a, 1a, ... are bundled before being housed in each of the housings 14. Accordingly, a plurality of exposed end portions 1a, 1a, ... may be bundled before the positive electrode current collector plate 100 is placed on the end surface of the electrode group 4 (step (e)). After the positive electrode exposed end portions 1a, 1a, ... have been bundled, it is sufficient to place the positive electrode current collector plate 100 on the end surface of the electrode group 4 such that the bundle of the positive electrode exposed end portions 1a, 1a, ... is housed in each of the housings 14.

Thereafter, the electrode group 4 to which the positive electrode current collector plate 100 is joined is turned upside down. Then, with the process described in the first embodiment, the negative electrode current collector plate 110 is placed on an end surface of the electrode group 4 (step (c)), thereby joining the negative electrode current collector plate 110 and the negative electrode exposed end portions 2a, 2a, ... together. At this time, as for the positive electrode, before the negative electrode current collector plate 110 is placed on the end surface of the electrode group 4, a plurality of negative electrode exposed end portions 2a, 2a, ... may be bundled (step (e)).

Subsequently, with the process described in the first embodiment, this power generation structure is housed in a battery case 5. Then, a nonaqueous electrolyte is poured into the battery case 5, and then the battery case 5 is sealed with a sealing plate 7 with a gasket 8 interposed therebetween. In this manner, a secondary battery of this embodiment is fabricated.

As described above, although the current collector plate 100 of this embodiment has a shape different from that of the current collector plate 10 of the first embodiment, fabrication of a secondary battery employing the current collector plate 100 of this embodiment can achieve substantially the same advantages as those of the first embodiment.

The secondary battery of this embodiment may be a secondary battery of one of the following eighth through eleventh modified examples.

### (Modified Example 8)

A secondary battery according to an eighth modified example is cylindrical as that of the second embodiment. In this modified example, two types of current collector plates are described.

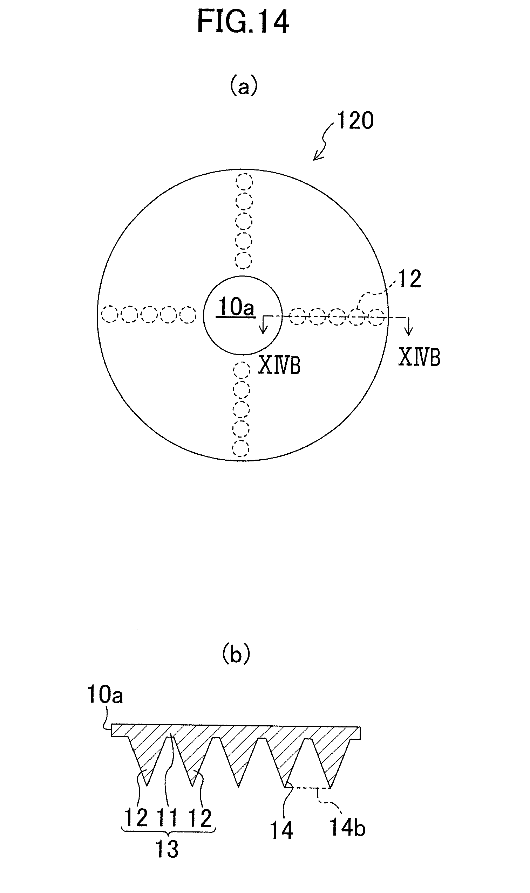

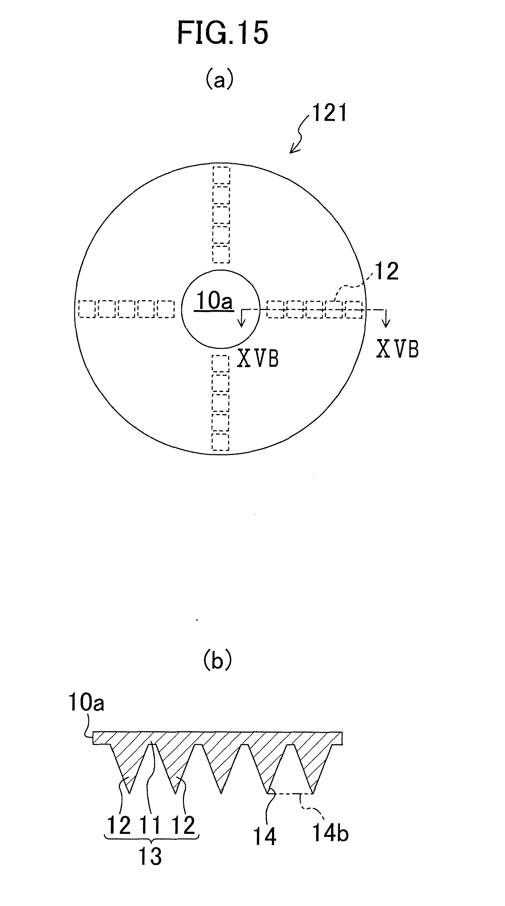

FIG. 14(a) is a plan view illustrating a current collector plate 120 of this modified example. FIG. 14(b) is a cross-sectional view taken along line XIVB-XIVB in FIG. 14(a). FIG. 15(a) is a plan view illustrating a current collector plate 121 of this modified example. FIG. 15(b) is a cross-sectional view taken along line XVB- XVB in FIG. 15(a).

In the current collector plate 120, a plurality of cones are provided on the surface (i.e., the lower surface in FIG. 14(b)) of the current collector plate 120 facing the tip surfaces of a plurality of exposed end portions 1a, 1a, .... These cones are radially arranged on the surface of the current collector plate 120, and spaced from each other in the direction of the diameter of this surface.

As the current collector plate 100 of the second embodiment, the current collector plate 120 has covered portions 13, 13, ... and housings 14, 14, .... Each of the covered portions 13 has a melting portion 11 and a pair of guide portions 12, 12. Each of the guide portions 12 is a cone provided on the current collector plate 120. The melting portion 11 is sandwiched between adjacent guide portions 12, 12 of the current collector plate 120. Each of the housings 14 is the space between the adjacent guide portions 12, 12.

In a configuration in which five guide portions 12, 12, ... are provided in the current collector plate 120 as shown in FIG. 14(b), the current collector plate 120 has four housings 14 and four covered portions 13. Specifically, suppose the guide portions 12 and the covered portions 13 are numbered in order from the side toward a through hole 10a to the side toward the edge of the current collector plate 120. Then, the first covered portion 13 has the first guide portion 12 and the second guide portion 12. The second covered portion 13 has the second guide portion 12 and the third guide portion 12. The third covered portion 13 has the third guide portion 12 and the fourth guide portion 12. In this manner, in the current collector plate 120 shown in FIGS. 14(a) and 14(b), as in the first and second embodiments, one guide portion 12 may belong to only one covered portion 13, or one guide portion 12 may belong to two covered portions 13, 13.

In such a configuration of the current collector plate 120, when the current collector plate 120 is placed on the end surface of the electrode group 4, each of the guide portions 12 is inserted between adjacent exposed end portions 1a, 1a, resulting in that a plurality of exposed end portions 1a, 1a, ... are also inserted through the opening 14b of each of the housings 14 and are housed in each of the housings 14. Accordingly, fabrication of a cylindrical secondary battery employing the current collector plate 120 of this modified example can achieve substantially the same advantages as those of the first embodiment.

The current collector plate 120 differs from the current collector plate 121 only in its shape. Specifically, in the current collector plate 121, the shape of each of the guide portions 12 is a pyramid (e.g., a quadrangular pyramid). Accordingly, fabrication of a cylindrical secondary battery employing the current collector plate 121 can achieve substantially the same advantages as those of the first embodiment.

In fabricating the current collector plate 120, 121, a recess may be formed in a portion of the current collector plate 120, 121 at the side opposite to each of the guide portions 12. Fabrication of a cylindrical secondary battery employing such a current collector plate having a recess can also achieve substantially the same advantages as those of the first embodiment.

### (Modified Example 9)

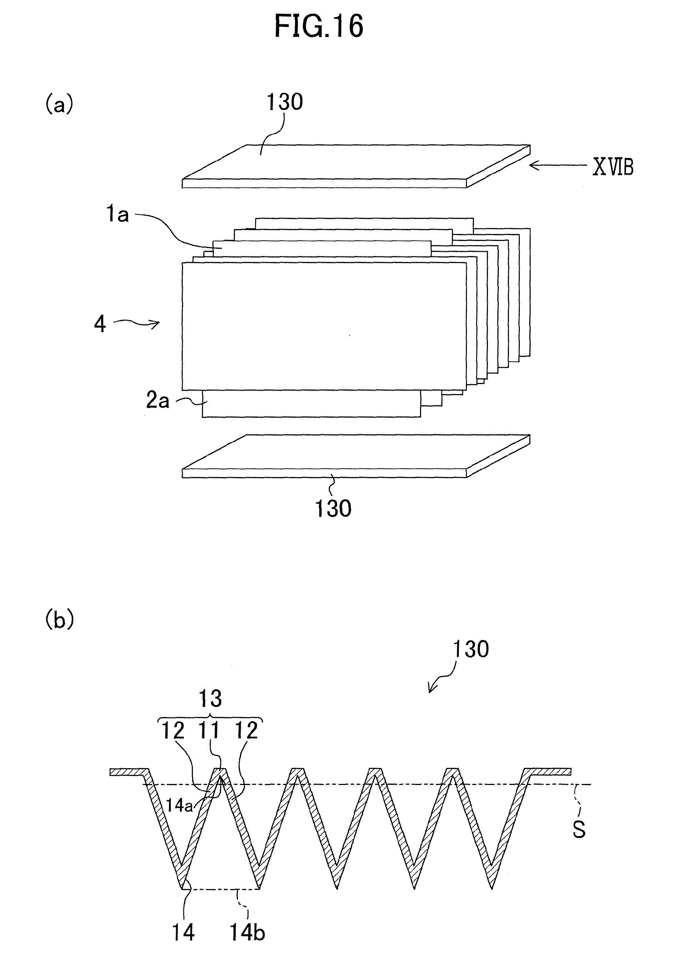

FIG. 16(a) is a perspective view showing a state before an electrode group 4 and a current collector plate 130 are joined together in a ninth modified example. FIG. 16(b) is a front view of the current collector plate 130 taken along line XVIB in FIG. 16(a). A secondary battery according to this modified example is of a layered type as in the first modified example.

In such a layered secondary battery, the current collector plate 130 is preferably rectangular in plan view as shown in FIG. 16(a), and has covered portions 13, 13, ... and housings 14, 14, ... described in the second embodiment.

In the layered secondary battery, the covered portions 13 may be formed to extend along the longitudinal direction of an exposed end 1a, or may be located only in part of the exposed end 1a in the longitudinal direction and arranged side by side in the direction perpendicular to this longitudinal direction. In either case, a plurality of exposed end portions 1a, 1a, ... may be housed in each of the housings 14 under the weight of the current collector plate 130. Alternatively, a plurality of exposed end portions 1a, 1a, ... may be bundled and then housed in each of the housings 14. In the case of the layered secondary battery, a linear portion of an electrode is present in an end surface of an electrode group 4. Thus, even when a plurality of exposed end portions 1a, 1a, ... are bundled and then housed in each of the housings 14 in a configuration in which the covered portions 13 extend in the longitudinal direction of the exposed end 1a, it is possible to suppress creasing of the exposed end 1a. Accordingly, in either case, fabrication of a secondary battery employing the current collector plate 130 of this modified example can achieve substantially the same advantages as those of the first embodiment.

A flat secondary battery may be fabricated by employing the current collector plate 130 of this modified example.

### (Modified Example 10)

A secondary battery according to a tenth modified example is of a layered type as that of the ninth modified example. In this tenth modified example, two types of current collector plates are described.

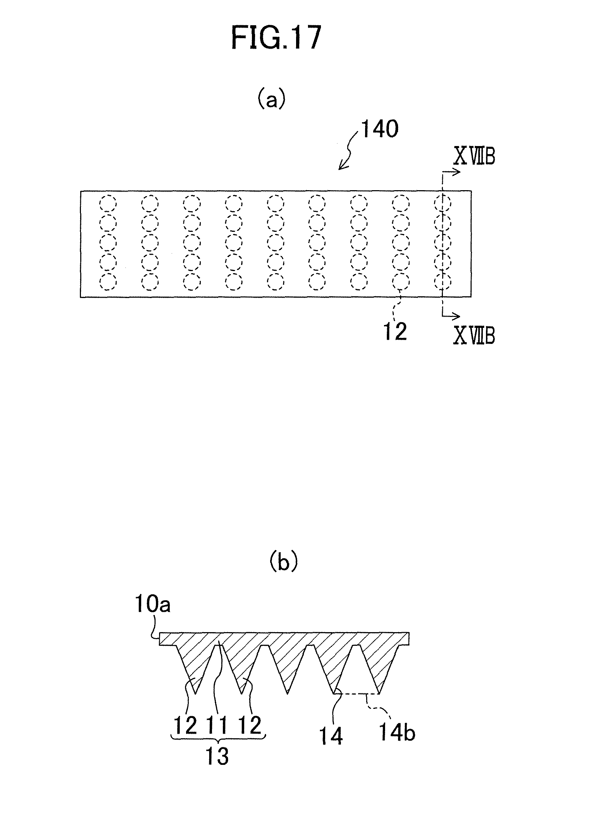

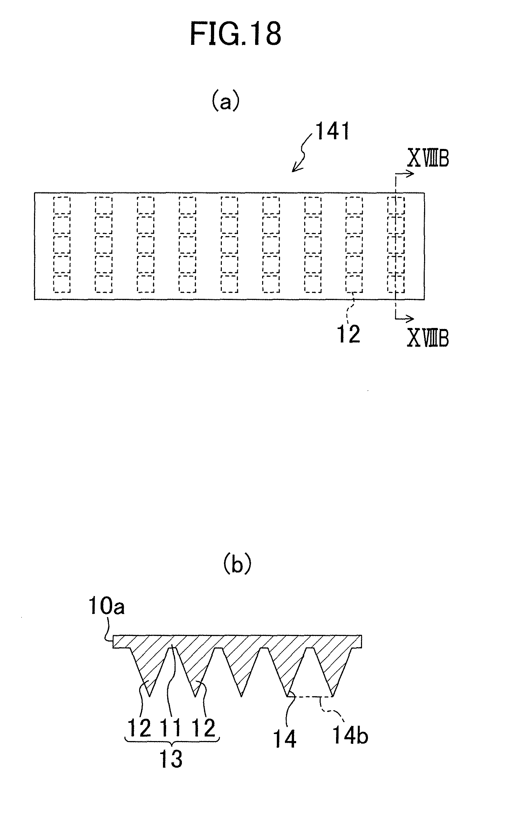

FIG. 17(a) is a plan view illustrating a current collector plate 140 of this modified example. FIG. 17(b) is a cross-sectional view taken along line XVIIB-XVIIB in FIG. 17(a). FIG. 18(a) is a plan view illustrating a current collector plate 141 of this modified example. FIG. 18(b) is a cross-sectional view taken along line XVIIIB-XVIIIB in FIG. 18(a).

The current collector plate 140 is a modification of the current collector plate 120 of the eighth modified example, and is a current collector plate for use in not only a cylindrical secondary battery but a layered secondary battery. For this reason, cone-shaped guide portions 12, 12, ... are spaced from each other in the direction perpendicular to the longitudinal direction of exposed ends 1a.

Similarly, the current collector plate 141 is a modification of the current collector plate 121 of the eighth modified example, and is a current collector plate for use in not a cylindrical secondary battery but a layered secondary battery. For this reason, pyramidal guide portions 12, 12, ... are spaced from each other in the direction perpendicular to the direction in which electrode plates are stacked in an electrode group 4.

Fabrication of a secondary battery employing one such current collector plates 140 and 141 can achieve substantially the same advantages as those of the first embodiment.

As in the eighth modified example, in fabricating the current collector plate 140, 141, a recess may be formed at a portion of the current collector plate 140, 141 at the side opposite covered portions 13. Fabrication of a cylindrical secondary battery employing a current collector plate having such a recess can also achieve substantially the same advantages as those of the first embodiment.

### (Modified Example 11)

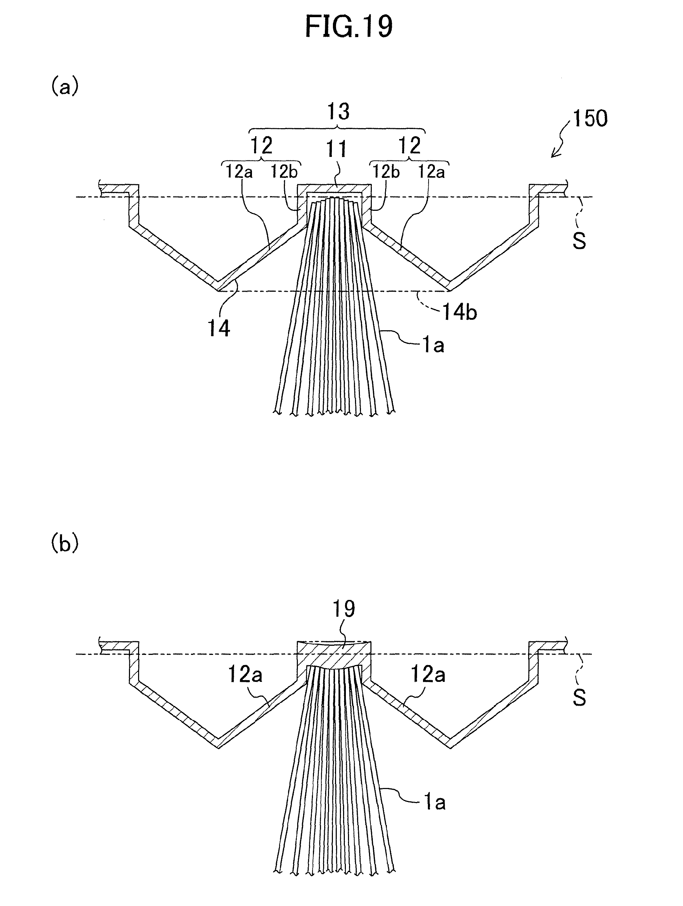

FIG. 19(a) shows a state in which a plurality of exposed end portions 1a, 1a, ... are housed in a housing 14 in an eleventh modified example. FIG. 19(b) shows a state in which a joint portion 19 is formed in the eleventh modified example.

In a current collector plate 150 of this modified example, each housing 14 has a recess, and the distance between a pair of guide portions 12, 12 decreases toward the bottom of the recess, as in the second embodiment. However, a melting portion 11 extends substantially perpendicularly to the depth direction of the recess of the housing 14, and substantially in parallel with the tip surfaces of the exposed end portions 1a housed in the housing 14.

With the current collector plate 150 of this modified example, the tip surfaces of a plurality of exposed end portions 1a, 1a, ... can be brought into contact with the lower surface of the melting portion 11. Accordingly, fabrication of a secondary battery employing the current collector plate 150 can achieve not only substantially the same advantages as those of the first embodiment, but also a new advantage of securing a sufficient junction strength between the current collector plate 150 and an electrode group 4.

Such a current collector plate 150 is preferably formed by pressing as described in the first embodiment. Specifically, it is sufficient to press a flat base material from above in FIG. 19(a). At this time, the base material is somewhat elongated downward in FIG. 19(a), thereby forming an extension 12b in addition to a main portion 12a in each of the guide portions 12. In this manner, although the extensions 12b are formed in forming the covered portions 13 and the housings 14 in the current collector plate 150, the extensions 12b are not necessarily provided in the current collector plate. In such a case, the advantages described above can also be achieved.

### «Other Embodiments»

According to the present invention, the following configurations may be employed.

In the foregoing description, pairs of guide portions are provided in the current collector plate. Alternatively, only one of each of the pairs of guide portions may be provided. In a current collector plate for use in a cylindrical secondary battery, one of each of the pairs of guide portions closer to the edge of the current collector plate is preferably provided, but one of each of the pairs of guide portions closer to the center of the current collector plate is not necessarily provided.

It is sufficient that the central angle θ of a housing in the depth direction of the recess of the housing may be determined depending on a material for a current collector plate.

In fabricating a secondary battery, the exposed end portions may be tilted before the current collector plate is placed on the end surface of the electrode group. Then, the exposed end portions can be easily housed in the housings.

The joint of the positive electrode current collector plate to the positive electrode exposed end and the joint of the negative electrode current collector plate to the negative electrode exposed end may be performed at a time. Then, the time necessary for fabricating a secondary battery can be reduced.

The present invention is applicable to secondary batteries, and is also applicable to a lithium ion secondary battery described in embodiments to be described later or a nickel-metal hydride storage battery, for example. The present invention is applicable to an electrochemical device (e.g., a capacitor) having a current collecting structure similar to that of a secondary battery.

### <Examples>

Now, examples of application of the present invention to a lithium ion secondary battery are described.

### 1. Fabrication of Lithium Ion Secondary Battery

### (Example 1)

### (1) Formation of Positive Electrode Plate

First, 85 parts by weight of lithium cobaltate powder was prepared as a positive electrode active material, 10 parts by weight of carbon powder was prepared as a conductive material, five parts by weight of poly(vinylidene fluoride) (PVDF) was prepared as a binder. Then, the positive electrode active material, the conductive material, and the binder were mixed into a positive electrode material mixture.

Next, the positive electrode material mixture was applied onto both surfaces of a positive electrode current collector of aluminum foil having a thickness of 15 µm and a width of 56 mm. At this time, the positive electrode material mixture was not applied onto a transverse end of the positive electrode current collector. Thereafter, the positive electrode material mixture was dried, and then the portion (i.e., the positive electrode coated portion) coated with the positive electrode material mixture was rolled, thereby forming a positive electrode plate having a thickness of 100 µm. At this time, the width of the positive electrode coated portion was 50 mm, and the width of the positive electrode exposed end was 6 mm.

### (2) Formation of Negative Electrode Plate

First, 95 parts by weight of artificial graphite powder was prepared as a negative electrode active material, and five parts by weight of PVDF was prepared as a binder. Then, the negative electrode active material and the binder were mixed into a negative electrode material mixture.

Next, the negative electrode material mixture was applied onto both surfaces of the negative electrode current collector of copper foil having a thickness of 10 µm and a width of 57 mm. At this time, the negative electrode material mixture was not applied onto a transverse end of the negative electrode current collector. Thereafter, the negative electrode material mixture was dried, and then the portion (i.e., a negative electrode coated portion) coated with the negative electrode material mixture was rolled, thereby forming a negative electrode plate having a thickness of 100 µm. At this time, the width of the negative electrode coated portion was 52 mm, and the width of the negative electrode exposed end was 5 mm.

### (3) Formation of Electrode Group

A microporous film (i.e., a separator) of polypropylene resin having a width of 53 mm and a thickness of 25 µm was sandwiched between the positive electrode coated portion and the negative electrode coated portion. Then, the positive electrode, the negative electrode, and the separator were wound in a spiral manner, thereby forming an electrode group.

### (4) Formation of Current Collector Plate

First, an aluminum plate of a 50-mm square having a thickness of 1 mm was pressed, thereby forming the aluminum plate into a disk shape. At the same time, uneven portions each having a height of 1 mm, a central angle θ of 60°, and a V shape in cross section were concentrically formed with a spacing of 2 mm in the direction of the diameter of the aluminum plate.

Next, this aluminum plate was punched out by pressing, thereby forming a hole with a diameter of 7 mm in a center portion of the disk. The diameter of the aluminum plate was 24 mm. In this manner, a positive electrode current collector plate was formed.

In the same manner, a negative electrode current collector plate made of copper and having a thickness of 0.6 mm was formed. In this negative electrode current collector plate, the height of uneven portions each having a V shape in cross section was 1 mm, and the central angle θ thereof was 120°. In this manner, the negative electrode current collector plate was formed.

### (5) Formation of Current Collecting Structure

The positive electrode current collector plate and the negative electrode current collector plate were respectively brought into contact with the end surfaces of the electrode group. Then, the positive electrode exposed end was welded to the positive electrode current collector plate by TIG welding, and the negative electrode exposed end was welded to the negative electrode current collector plate by TIG welding. In this manner, a current collecting structure was formed. At time, the TIG welding was performed under conditions in which the current value was 150 A and the welding time was 100 ms in welding the positive electrode current collector plate and in which the current value was 200 A and the welding time was 50 ms in welding the negative electrode current collector plate.

### (6) Formation of Cylindrical Lithium Ion Secondary Battery

First, the thus formed current collecting structure was placed in a cylindrical battery case which is open at one end. Thereafter, the negative electrode current collector plate was resistance welded to the battery case. Subsequently, an insulating plate was inserted between the negative electrode current collector plate and the battery case, and then the positive electrode current collector plate and the sealing plate were laser welded to the battery case with an aluminum positive electrode lead interposed therebetween.

Next, ethylene carbonate and ethyl methyl carbonate were mixed at a volume ratio of 1 : 1 as a nonaqueous solvent. Lithium phosphate hexafluoride (LiPF₆: solute) was dissolved in this nonaqueous solvent, thereby preparing a nonaqueous electrolyte.

Subsequently, the battery case was heated and dried, and then the nonaqueous electrolyte was poured into the battery case. Thereafter, the sealing plate was crimped onto the battery case with a gasket interposed therebetween to seal the battery case, thereby fabricating a cylindrical lithium ion secondary battery (sample 1) having a diameter of 26 mm and a height of 65 mm. This sample 1 had a battery capacity of 2600 mAh.

### (Example 2)

### (1) Formation of Positive Electrode Plate

First, 85 parts by weight of lithium cobaltate powder was prepared as a positive electrode active material, 10 parts by weight of carbon powder was prepared as a conductive material, and five parts by weight of poly(vinylidene fluoride) (PVDF) was prepared as a binder. Then, the positive electrode active material, the conductive material, and the binder were mixed into a positive electrode material mixture.

Next, the positive electrode material mixture was applied onto both surfaces of a positive electrode current collector of aluminum foil having a thickness of 15 µm and a width of 83 mm. At this time, the positive electrode material mixture was not applied onto a transverse end of the positive electrode current collector. Thereafter, the positive electrode material mixture was dried, and then the positive electrode coated portion was rolled, thereby forming a positive electrode plate having a thickness of 83 µm. At this time, the width of the positive electrode coated portion was 77 mm, and the width of the positive electrode exposed end was 6 mm.

### (2) Formation of Negative Electrode Plate

First, 95 parts by weight of artificial graphite powder was prepared as a negative electrode active material, and five parts by weight of PVDF was prepared as a binder. Then, the negative electrode active material and the binder were mixed into a negative electrode material mixture.

Next, the negative electrode material mixture was applied onto both surfaces of the negative electrode current collector of copper foil having a thickness of 10 µm and a width of 85 mm. At this time, the negative electrode material mixture was not applied onto a transverse end of the negative electrode current collector. Thereafter, the negative electrode material mixture was dried, and then the negative electrode coated portion was rolled, thereby forming a negative electrode plate having a thickness of 100 µm. At this time, the width of the negative electrode coated portion was 80 mm, and the width of the negative electrode exposed end was 5 mm.

### (3) Formation of Electrode Group

A microporous film of polypropylene resin having a width of 81 mm and a thickness of 25 µm was prepared as a separator. This separator was placed between the positive electrode and the negative electrode, and the positive electrode plate and the negative electrode plate were placed to cover the positive electrode coated portion with the negative electrode coated portion. Then, the positive electrode, the negative electrode, and the separator were wound in a flat shape, thereby forming an electrode group.

### (4) Formation of Current Collector Plate

An aluminum plate having a thickness of 0.5 mm, a width of 8 mm, and a length of 55 mm was pressed, thereby forming projections each having a height of 1 mm, a central angle θ of 60°, and a V shape in cross section were formed in the current collector plate to extend in the longitudinal direction thereof. In this manner, a positive electrode current collector plate was formed.

In the same manner, a negative electrode current collector plate having a thickness of 0.6 mm and made of copper was formed. In this negative electrode current collector plate, the height of the projections having a V shape in cross section was 1 mm, and the central angle θ thereof was 120°.

### (5) Formation of Current Collecting Structure

The positive electrode current collector plate and the negative electrode current collector plate were respectively brought into contact with the end surfaces of the electrode group. Then, the positive electrode exposed end was welded to the positive electrode current collector plate by TIG welding, and the negative electrode exposed end was welded to the negative electrode current collector plate by TIG welding. In this manner, a current collecting structure was formed. At time, the TIG welding was performed under conditions in which the current value was 150 A and the welding time was 100 ms in welding the positive electrode current collector plate and in which the current value was 200 A and the welding time was 50 ms in welding the negative electrode current collector plate.

### (6) Formation of Flat Lithium Ion Secondary Battery

First, a rectangular battery case which was open at both ends was prepared. Then, the flat wound electrode group was inserted into the battery case with the negative electrode exposed end of the electrode group projected from one opening of the battery case at one end.

Next, the negative electrode current collector plate and a U-shaped sheet metal were subjected to resistance welding such that the U-shaped sheet metal was resistance welded to a flat plate (i.e., the bottom plate of the battery case). Then, the electrode group was pushed so as to cover, with this bottom plate, the opening of the battery case at one end, thereby laser welding the bottom plate to this opening of the battery case. In this manner, the opening of the battery case at one end was sealed.

In this state, the positive electrode exposed end projects from the opening of the battery case at the other end. Thus, the positive electrode current collector plate and a flat plate were laser welded such that this flat plate and a sealing plate to be a lid were laser welded. Then, the flat plate was folded and housed in the battery case. At this time, the sealing plate had an injection hole, but this injection hole was not sealed.

Subsequently, ethylene carbonate and ethyl methyl carbonate were mixed at a volume ratio of 1 : 1 as a nonaqueous solvent. Then, lithium phosphate hexafluoride (LiPF₆) was dissolved in this nonaqueous solvent, thereby preparing a nonaqueous electrolyte.

Then, the battery case was heated and dried, and then the nonaqueous electrolyte was poured into the battery case through the injection hole. Thereafter, the injection hole was sealed. In this manner, a flat lithium ion secondary battery (sample 2) was fabricated.

At this time, the flat lithium ion secondary battery had a thickness of 10 mm, a width of 58 mm, a height of 100 mm, and a design capacity of 2600 mAh.

### (Example 3)

In Example 3, the current collector plate illustrated in FIG. 14 was formed.

### (1) Formation of Current Collector Plate

An aluminum plate of a 50-mm square having a thickness of 1 mm was punched out into a disk shape, thereby forming a hole having a diameter of 7 mm in a center portion of the disk. Then, cones each having a diameter of 2 mm, a height of 1 mm, and a central angle of 40° were radially formed with a spacing of 2 mm. The diameter of the aluminum plate was 24 mm. In this manner, a positive electrode current collector plate was formed.

In the same manner, cones each having a diameter of 2 mm, a height of 1 mm, and a central angle of 90° were radially formed with a spacing of 2 mm in a negative electrode current collector plate having a thickness of 0.6 mm and made of copper.

Using the thus formed positive electrode current collector plate and negative electrode current collector plate, a cylindrical lithium ion secondary battery (sample 3) was fabricated in the same manner as in Example 1.

### (Example 4)

### (4) Formation of Current Collector Plate

In Example 3, the current collector plate illustrated in FIG. 18 was formed.

First, an aluminum plate having a thickness of 1 mm, a width of 8 mm, and a length of 55 mm was prepared. Then, quadrangular pyramids each having a length of 2 mm at one side, a height of 1 mm, and a central angle of 40°, were formed with a spacing of 2 mm in the width direction of this aluminum plate, thereby forming a positive electrode current collector plate. In the same manner, quadrangular pyramids each having a length of 2 mm at one side, a height of 1 mm, and a central angle of 90°, were formed with a spacing of 2 mm in the width direction of a copper plate having a thickness of 0.6 mm. In the manner as in Example 2, a flat lithium ion secondary battery (sample 4) was fabricated.

### (Comparative Example 1)

In Comparative Example 1, a lithium ion secondary battery illustrated in FIG. 21 was fabricated.

Specifically, first, an electrode group was formed using a positive electrode plate and a negative electrode plate in a manner similar to that in Example 1.

Then, an end of the positive electrode plate and an end of the negative electrode plate were pressed in the axial direction of a mandrel, thereby forming flat surfaces at the respective ends of the positive and negative electrode plates. Thereafter, the flat surface at the end of the positive electrode plate was brought into contact with an aluminum positive electrode current collector plate (thickness: 0.5 mm, diameter: 24 mm), and were welded to the positive electrode current collector plate by TIG welding. In the same manner, the flat surface at the end of the negative electrode plate was brought into contact with a copper negative electrode current collector plate (thickness: 0.3 mm, diameter: 24 mm), and were welded to the negative electrode current collector plate by TIG welding.

At this time, the TIG welding was performed under conditions in which the current value was 100 A and the welding time was 100 ms in welding the positive electrode current collector plate and in which the current value was 130 A and the welding time was 50 ms in welding the negative electrode current collector plate. Using the thus formed current collecting structure, a cylindrical lithium secondary battery (sample 5) was fabricated in a manner similar to that of Example 1.

### (Comparative Example 2)

In Comparative Example 2, a lithium ion secondary battery illustrated in FIG. 22 was formed.

First, an aluminum plate having a thickness of 0.5 mm, a width of 8 mm, and a length of 55 mm was pressed such that peaks of portions each having a height of 1 mm, a central angle of 120°, and a V shape in cross section were arranged in parallel with a spacing of 2 mm on a surface of the aluminum plate.

Next, the aluminum plate was partially cut away in the width direction, thereby forming grooves. In this manner, a positive electrode current collector plate was formed. In the same manner, a copper negative electrode current collector plate having a thickness of 0.3 mm was formed.

Using the thus formed positive electrode current collector plate and negative electrode current collector plate, a flat lithium ion secondary battery (sample 6) was fabricated in a manner similar to that of Example 3.

### 2. Evaluation of Lithium Ion Secondary Battery

The following evaluation was performed on 50 units for each of samples 1 through 6 of lithium ion secondary batteries fabricated in the manner described above.

### (Appearance Inspection on Joint Portion between an End in Width Direction of Electrode Plate and Current Collector Plate)

An electrode group was taken out from a battery case of a lithium ion secondary battery fabricated in the manner described above, and a joint portion was visually inspected.

An observation result was shown as the state of the joint portion in Table 1.

Table 1 shows that in samples 1 through 4, no holes were observed in the joint portion, and that no fractures of a current collector (i.e., an electrode plate) were observed.

On the other hand, in sample 5, holes were observed in several joint portions per 50 lithium ion secondary batteries. In sample 6, fractures of the current collectors were observed in all the lithium ion secondary batteries. In addition, in sample 6, melted metal did not reach the exposed end in some cases.

### (Observation of Bending of Electrode Plate)

An electrode group was taken out from a battery case of a lithium ion secondary battery fabricated in the manner described above, and an electrode plate was visually inspected.

An observation result is shown as the state of the electrode plate in Table 1.

Table 1 shows that the electrode plate was somewhat bent in samples 1 through 4. This some bending seems to be because the current collector plate was brought into contact with the end surface of the electrode group during welding. In addition, bending to an extent enough to cause distortion was hardly observed in a mixture material portion. In each of samples 1 through 4, neither peeling of a mixture material from the current collector nor damage on the mixture material was observed.

On the other hand, in sample 5, a large number of fractures of a mixture material were observed. This phenomenon seems to occur when a transverse end of the electrode plate was pressed against the current collector plate to form a flat surface at an end of the electrode plate.

In sample 6, no bending of the current collector was observed.

### (Measurement of Tensile Strength)

The tensile strength at a welding portion was measured based on JIS Z2241 for five units out of each of samples 1 through 6. Specifically, holders of a tensile strength testing machine were stretched in opposite directions (i.e., in the directions in which the electrode group and the current collector plate move away from each other) along the axis of the tensile strength testing machine at a constant speed, with the electrode group held by one of the holders and the current collector plate held by the other holder. The load at a breakage of the joint portion is defined as the tensile strength.

A measurement result is shown as a tensile strength in Table 1.

Table 1 shows that in each of samples 1 through 4, the tensile strength was 50 N or more. On the other hand, in sample 5, the tensile strength was 10 N or less and the joint portion was broken in three out of the five units. In sample 6, the tensile strength was 10 N or less and the joint portion was broken in one out of the five units.

### (Measurement of Battery Internal Resistance)

The internal resistance was measured for each of samples 1 through 6. Specifically, first, a charge/discharge cycle in which a battery was charged to 4.2 V with a constant current of 1250 mA and then was discharged to 3.0 V at a constant current of 1250 mA was repeated three times for each sample. Thereafter, alternating current of 1 kHz was applied to each of samples 1 through 6, thus measuring the internal resistance of the secondary battery.

A measurement result was shown as the internal resistance in Table 1.

As shown in Table 1, the average internal resistance was 5 mΩ for samples 1 and 2, and variations thereof were about 10%. In samples 3 and 4, the average internal resistance was 5.8 mΩ, and variations thereof were about 5%.

On the other hand, in sample 5, the average internal resistance was 11 mΩ, and variations thereof were 20%. In sample 6, the average internal resistance was 13.5 mΩ, and variations thereof were 30% or more.

An average output current (I) was calculated from measured internal resistance (R) for each sample. In the case of charging a battery to 4.2 V and then discharging the battery to 1.5 V, the equation, R (resistance) × I (current) = Δ 2.7 V (voltage), is established. Then, I (current) is obtained as I (current) = Δ 2.7 (voltage) / R (resistance).

A calculation result is shown as an output current in Table 1.

Table 1 shows that samples 1 through 4 are suitable for discharging large current.

**[Table 1]**

| | CURRENT COLLECTOR PLATE | JOINT PORTION | ELECTRODE PLATE | TENSILE STRENGTH | INTERNAL RESISTANCE (VARIATION) | OUTPUT CURRENT |
|---|---|---|---|---|---|---|
| Ex. 1 (Sample 1) | FIG. 2 | NO FAILURE | NO FAILURE | ≧50 N | 5 m Ω (10 %) | 540 A |
| Ex. 2 (Sample 2) | FIG. 7 | NO FAILURE | NO FAILURE | ≧50 N | 5 m Ω (10 %) | 540 A |
| Ex. 3 (Sample 3) | FIG. 14 | NO FAILURE | NO FAILURE | ≧50 N | 5.8 m Ω ( 5 %) | 465 A |
| Ex. 4 (Sample 4) | FIG. 18 | NO FAILURE | NO FAILURE | ≧50 N | 5.8 m Ω (5 %) | 465 A |
| Comparative Ex. 1 (Sample 5) | FIG. 21 | OPENING IN JOINT PORTION | MIXTURE MATERIAL PEELING | ≦10 N (PROBABILITY OF 3/5) | 11 m Ω (20 %) | 245 A |
| Comparative Ex. 2 (Sample 6) | FIG. 22 | BREAKAGE OF CURRENT COLLECTOR INCOMPLETE JOINT PORTION | NO FAILURE | ≦10 N (PROBABILITY OF 1/5) | 13.5 m Ω (30 %) | 200 A |

### INDUSTRIAL APPLICABILITY

As described above, the present invention is useful for secondary batteries having current collecting structures suitable for discharging large current. For example, the present invention is applicable to drive power supplies for electric tools and electric vehicles requiring high power, large-capacity backup power supplies, and storage power supplies.

## Claims

1. A method for fabricating a secondary battery, the method comprising the steps of:
(a) preparing an electrode group in which a positive electrode plate, a negative electrode plate, and a porous insulating layer are arranged such that an exposed end at one transverse end of at least one of the positive and negative electrode plates projects from the porous insulating layer;
(b) preparing a current collector plate which includes at least one housing for housing the exposed end and includes a covered portion serving as a side wall of the housing, and in which the housing has an opening;
(c) inserting the exposed end into the housing through the opening of the housing; and
(d) joining the current collector plate and the electrode group together, wherein
the covered portion of the current collector plate prepared at step (b) includes
a melting portion located closer to an outside of the electrode group than a tip surface of the exposed end when the exposed end is housed in the housing, and
at least one guide portion connected to the melting portion and located closer to a center of the electrode group than the tip surface of the exposed end when the exposed end is housed in the housing,
in step (c), the electrode group and the current collector plate are disposed such that the housing is located closer to the tip surface of the exposed end than the covered portion, and
in step (d), the melting portion is melted, thereby welding the current collector plate and the electrode group together.

2. The method of claim 1, wherein the current collector plate prepared at step (b) has at least one uneven portion which is projected and recessed in a width direction of the current collector plate, and
the covered portion is the uneven portion.

3. The method of claim 1, wherein in the current collector plate prepared at step (b), the covered portion includes a pair of the at least one guide portion, and the pair of the at least one guide portion is respectively connected to both ends of the melting portion in cross section perpendicular to a longitudinal direction of the exposed end to be housed in the housing at step (c), and
in step (c), the pair of the at least one guide portion allows the exposed end to be housed in the housing, while sandwiching the exposed end in a direction substantially perpendicular to the longitudinal direction of the exposed end.

4. The method of claim 3, wherein in the current collector plate prepared at step (b), the housing has a recess, and a distance between the pair of the at least one guide portion deceases toward a bottom of the recess.

5. The method of claim 4, wherein in the current collector plate prepared at step (b), a central angle at a tip of the housing in a direction along a depth of the recess of the housing is an acute angle.

6. The method of claim 5, wherein the current collector plate prepared at step (b) is made of Al.

7. The method of claim 4, wherein in the current collector plate prepared at step (b), a central angle at a tip of the housing in a direction along a depth of the recess of the housing is an obtuse angle.

8. The method of claim 7, wherein the current collector plate prepared at step (b) is made of Cu.

9. The method of claim 1, wherein in the current collector plate prepared at step (b), the housing extends along at least a portion in a longitudinal direction of the exposed end to be housed in the housing at step (c).

10. The method of claim 1, wherein in the current collector plate prepared at step (b), the housing is associated with a portion in a longitudinal direction of the exposed end to be housed in the housing at step (c), and multiple ones of the at least one housing are arranged side by side in a direction perpendicular to the longitudinal direction.

11. The method of claim 10, wherein the exposed end of the electrode group prepared at step (a) includes a plurality of exposed end portions,
the method further includes the step of (e) bundling the exposed end portions, between step (b) and step (c), and
in step (c), the exposed end portions bundled at step (e) are inserted in the housing through the opening.

12. The method of claim 10, wherein in the current collector plate prepared at step (b), the melting portion extends in parallel with the tip surface of the exposed end to be housed in the housing at step (c).

13. The method of claim 10, wherein in the current collector plate prepared at step (b), either a cone or a pyramid is provided on a surface of the current collector plate facing the tip surface of the exposed end to be housed in the housing at step (c), and
the cone or pyramid is the at least one guide portion.

14. A secondary battery, comprising:
an electrode group in which a positive electrode plate, a negative electrode plate, and a porous insulating layer are arranged such that an exposed end at one transverse end of at least one of the positive and negative electrode plates projects from the porous insulating layer;
a current collector plate which includes at least one housing for housing the exposed end and includes a covered portion serving as a side wall of the housing, and in which the housing has an opening for inserting the exposed end in the housing; and
a joint portion in which the current collector plate and the electrode group are joined together, wherein
the covered portion of the current collector plate includes
a melting portion located closer to an outside of the electrode group than a tip surface of the exposed end when the exposed end is housed in the housing, and
a guide portion connected to the melting portion and located closer to a center of the electrode group than the tip surface of the exposed end when the exposed end is housed in the housing, and
the current collector plate and the electrode group are welded together by melting the melting portion.

15. The secondary battery of claim 14, wherein in the joint portion, the tip surface of the exposed end is covered with the current collector plate.

16. The secondary battery of claim 14, wherein the melting portion is melted upon application of energy, and
the joint portion is formed by a flow, toward the exposed end, of the melting portion which has been melted.

17. The secondary battery of claim 14, wherein a portion of the current collector plate at a side opposite the joint portion has a recess.

18. The secondary battery of claim 14, wherein the guide portion constitutes a pair of guide portions connected to both ends of the melting portion in cross section perpendicular to a longitudinal direction of the exposed end, and
the exposed end is joined to the current collector plate, while being sandwiched between the pair of guide portions in a direction substantially perpendicular to the longitudinal direction.

19. The secondary battery of claim 14, wherein the joint portion is formed along at least a portion in a longitudinal direction of the exposed end, and
in the joint portion, the tip surface of the exposed end is joined to the current collector plate.

20. The secondary battery of claim 14, wherein the joint portion is formed perpendicularly to a longitudinal direction of the exposed end, and
in the joint portion, the tip surface of the exposed end is joined to the current collector plate.
